(19) Europäisches Patentamt
European Patent Office
Office européen des brevets

(11) **EP 3 951 698 A1**

(12) **EUROPEAN PATENT APPLICATION**
published in accordance with Art. 153(4) EPC

(43) Date of publication:
**09.02.2022 Bulletin 2022/06**

(21) Application number: **19922421.3**

(22) Date of filing: **29.03.2019**

(51) International Patent Classification (IPC):
*G06Q 50/26* (2012.01)

(52) Cooperative Patent Classification (CPC):
**G06Q 50/26**

(86) International application number:
**PCT/JP2019/014273**

(87) International publication number:
**WO 2020/202361 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventors:
• **INOUE, Akira
Tokyo 108-8001 (JP)**
• **IWATA, Atsushi
Tokyo 108-8001 (JP)**
• **FUDEMOTO, Kunio
Tokyo 108-8001 (JP)**

(74) Representative: **Betten & Resch
Patent- und Rechtsanwälte PartGmbB
Maximiliansplatz 14
80333 München (DE)**

(54) **INFORMATION PROCESSING DEVICE, TERMINAL DEVICE, INFORMATION PROCESSING METHOD, AND RECORDING MEDIUM**

(57)    An information processing apparatus according to the present invention comprising: a determination unit that determines a creditworthiness of a traveler based on history information regarding a first travel of the traveler; and an output unit that outputs information regarding a second travel based on the creditworthiness associated with identification information of the traveler who is scheduled for the second travel.

FIG. 1

**Description**

[Technical field]

The present invention relates to an information processing apparatus, an terminal device, an information processing method, and a storage medium.

[Background Art]

Patent Literature 1 discloses an immigration inspection system for determining whether or not the traveler is allowed to use an automated gate in a KIOSK terminal.

[Citation List]

[Patent Literature]

PTL 1: Japanese Patent Laid-Open No. 2015-222459

[Summary of Invention]

[Technical Problem]

In the immigration inspection system described in Patent Literature 1, a traveler who is not allowed to use an automated gate must undergo an inspection procedure similar to that of a first-time traveler even if the traveler is a person who travels many times as an excellent traveler. For this reason, the immigration inspection system has a problem in that the inspection procedure for the traveler cannot be carried out efficiently.

In view of the above-described problems, an object of the present invention is to provide an information processing apparatus, a terminal device, an information processing method, and a storage medium, which can improve efficiency of various inspection procedures for the travelers.

[Solution to Problem]

According to one aspect of the present invention, there is provided an information processing apparatus comprising: a determination unit that determines a creditworthiness of a traveler based on history information regarding a first travel of the traveler; and an output unit that outputs information regarding a second travel based on the creditworthiness associated with identification information of the traveler who is scheduled for the second travel.

According to another aspect of the present invention, there is provided a terminal device comprising: an acquisition unit that acquires a creditworthiness of a traveler based on history information regarding a first travel of the traveler; and an output unit that outputs information regarding the second travel based on the creditworthiness associated with identification information of the traveler who is scheduled for the second travel.

According to yet another aspect of the present invention, there is provided an information processing method comprising: determining a creditworthiness of a traveler based on history information regarding a first travel of the traveler; and outputting information regarding the second travel based on the creditworthiness associated with identification information of the traveler who is scheduled for the second travel.

According to yet another example aspect of the present invention, there is provided a storage medium storing a program that causes a computer to execute: determining a creditworthiness of a traveler based on history information regarding a first travel of the traveler; and outputting information regarding the second travel based on the creditworthiness associated with identification information of the traveler who is scheduled for the second travel.

[Advantageous Effects of Invention]

According to the present invention, it is possible to provide an information processing apparatus, a terminal device, an information processing method, and a storage medium, which can improve efficiency of various inspection procedures for the travelers.

[Brief Description of Drawings]

**EP 3 951 698 A1**

[FIG. 1] FIG. 1 is a schematic diagram showing an example of the overall configuration of a traveler control system according to a first example embodiment.

[FIG. 2A] FIG. 2A is a diagram showing an example of information stored in a user information DB according to the first example embodiment.

[FIG. 2B] FIG. 2B is a diagram showing an example of information stored in a travel/authentication history information DB according to the first example embodiment.

[FIG. 2C] FIG. 2C is a diagram showing an example of information stored in a creditworthiness information DB according to the first example embodiment.

[FIG. 3] FIG. 3 is a block diagram showing an example of a hardware configuration of a management server according to the first example embodiment.

[FIG. 4] FIG. 4 is a block diagram showing an example of a hardware configuration of a check-in terminal according to the first example embodiment.

[FIG. 5] FIG. 5 is a block diagram showing an example of a hardware configuration of an operation terminal according to the first example embodiment.

[FIG. 6] FIG. 6 is a block diagram showing an example of a hardware configuration of a security inspection apparatus according to the first example embodiment.

[FIG. 7] FIG. 7 is a block diagram showing an example of a hardware configuration of an automated gate apparatus according to the first example embodiment.

[FIG. 8] FIG. 8 is a block diagram showing an example of a hardware configuration of a boarding gate apparatus according to the first example embodiment.

[FIG. 9] FIG. 9 is a block diagram showing an example of a hardware configuration of an entrance gate terminal according to the first example embodiment.

[FIG. 10] FIG. 10 is a block diagram showing an example of a hardware configuration of an exit gate terminal according to the first example embodiment.

[FIG. 11] FIG. 11 is a flowchart showing an example of processing of the management server according to the first example embodiment.

[FIG. 12] FIG. 12 is a sequence diagram showing an example of processing of the check-in terminal and the management server according to the first example embodiment.

[FIG. 13] FIG. 13 is a diagram showing an example of a screen displayed by the check-in terminal according to the first example embodiment.

[FIG. 14] FIG. 14 is a sequence diagram showing an example of processing of the security inspection apparatus and the management server according to the first example embodiment.

[FIG. 15] FIG. 15 is a sequence diagram showing an example of processing of the automated gate apparatus and the management server according to the first example embodiment.

[FIG. 16] FIG. 16 is a sequence diagram showing an example of processing of the boarding gate apparatus and the management server according to the first example embodiment.

[FIG. 17] FIG. 17 is a sequence diagram showing an example of processing of the automated gate apparatus and the management server according to the first example embodiment.

[FIG. 18] FIG. 18 is a sequence diagram showing an example of processing of the automatic customs gate apparatus and the management server according to the first example embodiment.

[FIG. 19] FIG. 19 is a sequence diagram showing an example of processing of the operation terminal and the management server according to the first example embodiment.

[FIG. 20] FIG. 20 is a diagram showing an example of a screen displayed by the operation terminal according to the first example embodiment.

[FIG. 21] FIG. 21 is a diagram showing an example of a screen displayed by the operation terminal according to the first example embodiment.

[FIG. 22] FIG. 22 is a diagram showing an example of a screen displayed by the operation terminal according to the first example embodiment.

[FIG. 23] FIG. 23 is a flowchart showing an example of processing of the management server according to a second example embodiment.

[FIG. 24] FIG. 24 is a schematic diagram showing a method of learning processing according to a second example embodiment.

[FIG. 25] FIG. 25 is a flowchart showing an example of processing of the management server according to the second example embodiment.

[FIG. 26] FIG. 26 is a schematic diagram showing an example of the overall configuration of a traveler control system according to a third example embodiment.

[FIG. 27] FIG. 27 is a block diagram showing an example of a hardware configuration of a user terminal according to the third example embodiment.

3

[FIG. 28] FIG. 28 is a sequence diagram showing an example of processing performed by the management server and the user terminal according to the third example embodiment.

[FIG. 29] FIG. 29 is a diagram showing an example of a screen displayed by the user terminal according to the third example embodiment.

[FIG. 30] FIG. 30 is a diagram showing an arrangement example of signage terminals according to a fourth example embodiment.

[FIG. 31] FIG. 31 is a block diagram showing an example of a hardware configuration of the signage terminal according to the fourth example embodiment.

[FIG. 32] FIG. 32 is a sequence diagram showing an example of processing of the signage terminal and the management server according to the fourth example embodiment.

[FIG. 33] FIG. 33 is a diagram showing an example of a screen displayed by the signage terminal according to the fourth example embodiment.

[FIG. 34] FIG. 34 is a block diagram showing functions of an information processing apparatus according to a fifth example embodiment.

[FIG. 35] FIG. 35 is a block diagram showing functions of a terminal device according to a sixth example embodiment.

[Description of Embodiments]

Exemplary example embodiments of the disclosure will be described below with reference to the drawings. Throughout the drawings, similar features or corresponding features are labeled with the same references, and the description thereof may be omitted or simplified.

[First Example Embodiment]

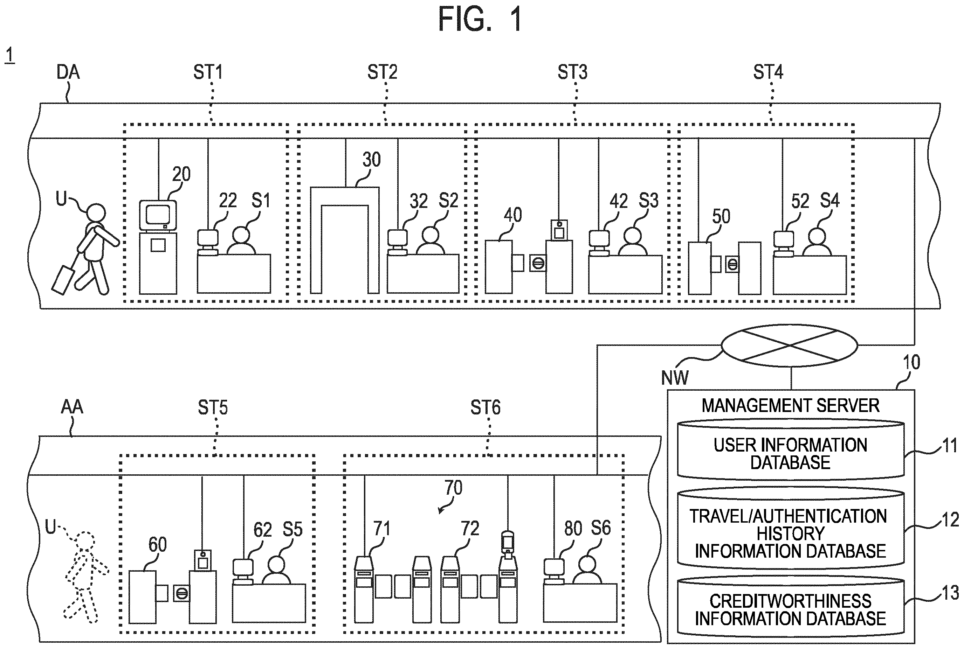

FIG. 1 is a schematic diagram showing an example of the overall configuration of a traveler control system 1 according to the present example embodiment. The traveler control system 1 according to the present example embodiment is, for example, an information processing system that supports a series of examinations performed in the first country and the second country, respectively, on a user (traveler) U who is scheduled to leave the first country from the airport DA in the first country and enter the second country from the airport AA in the second country different from the first country in an aircraft. The traveler control system 1 is operated by, for example, a public institution such as an immigration bureau or a trustee entrusted with services by the institution.

In the traveler control system 1 of the present example embodiment, a check-in terminal 20, a security inspection apparatus 30, an automated gate apparatus 40, a boarding gate apparatus 50, an automated gate apparatus 60, an automatic customs gate apparatus 70, and operation terminals 22, 32, 42, 52, 62 and 80 are connected to a common management server 10 via a network NW. The network NW includes a Local Area Network (LAN) having a local area communication network of an airport, a Wide Area Network (WAN), a mobile communication network, and the like. The connection system is not limited to the wired system, but may be a wireless system. Note that, for convenience of description, FIG.1 illustrates only the devices to be used until departure in the airport DA of the departure country (the first country) and only the devices to be used until immigration in the airport AA of the arrival country (the second country).

The management server 10 is an information processing apparatus that manages various examinations when the user U enters or leaves the country. The management server 10 is installed in a facility such as an airport company or an airline company that operates an airport DA or an airport AA. The management server 10 needs not be a single server, and may be configured as a server group including a plurality of servers. For example, a server that performs some functions of the management server 10 may be installed in the first country, and another server that performs the remaining functions of the management server 10 may be installed in the second country.

As shown in FIG. 1, the examination in the airport DA of the first country is sequentially performed in four authentication stages ST1 to ST4 indicated by broken lines. The examination in the airport AA of the second country is sequentially performed in two authentication stages ST5 and ST6 indicated by broken lines. Hereinafter, the relationship between each apparatus and the authentication stage will be described.

The check-in terminal 20 is a self-terminal for the user U to carry out a check-in procedure by oneself. The check-in terminal 20 is installed in a check-in lobby in an airport. Further, the operation terminal 22 is installed in a manned counter of the check-in lobby. The staff S1 uses the operation terminal 22 to carry out a check-in procedure of the user U. A check-in procedure is a procedure to register at least information used for identifying the user U scheduled to board an airplane. Specifically, the check-in procedure is a procedure to input user information including identity information and boarding information on the user U. Hereinafter, the check-in procedure performed in the check-in lobby is referred to as "authentication stage ST1". When the user U is authenticated in the authentication stage ST1, the user U moves to the security inspection site.

The security inspection apparatus 30 is installed in a security inspection site in an airport, and is an apparatus for confirming by a metal detector gate whether or not the user U is wearing metals which can be dangerous materials. Note that, the security inspection apparatus 30 includes, in addition to a metal detector, as well as an X-ray inspection device that uses X-rays to check the presence or absence of dangerous objects in the carry-on baggage and the like. The user U who has completed the check-in procedure undergoes the security inspection procedure by the security inspection apparatus 30 at the security inspection site. The operation terminal 32 is installed in a manned counter of the security inspection site. The staff S2 uses the operation terminal 32 to carry out the security inspection procedure of the user U. Hereinafter, the security inspection procedure performed in the security inspection site is referred to as "authentication stage ST2". When the user U is authenticated in the authentication stage ST2, the user U moves to the departure inspection site.

The automated gate apparatus 40 is installed in a departure inspection site in the airport and is a device that automatically performs a departure inspection procedure of the user U. The user U who is allowed to use the departure inspection procedure by the automated gate apparatus 40 may be restricted to a person who performs pre-registration regarding the use of the automated gate apparatus 40. In addition, the operation terminal 42 is installed in a manned counter of a departure inspection site. The staff S3 uses the operation terminal 42 to perform a departure inspection procedure of the user U. Hereinafter, the departure inspection procedure performed in the departure inspection site is referred to as "authentication stage ST3". When the user U is authenticated in the authentication stage ST3, the user U moves to the departure area.

The boarding gate apparatus 50 is a traffic control device installed in each boarding gate. The boarding gate apparatus 50 confirms that the user U is a traveler who is allowed to board from the boarding gate to the aircraft. The operation terminal 52 is installed in a manned counter of the boarding gate. The staff S4 uses the operation terminal 52 in order to perform a boarding procedure of the user U to the aircraft. Hereinafter, the boarding procedure performed in the boarding gate is referred to as "authentication stage ST4". When the user U is authenticated in the authentication stage ST4, the user U boards the aircraft to leave the first country.

The automated gate apparatus 60 is installed in an immigration inspection site in the airport and automatically performs an immigration inspection procedure of the user U. The user U who is allowed to use the automated gate apparatus 60 may be restricted to a person who performs pre-registration regarding the use of the automated gate apparatus 60. In addition, the operation terminal 62 is installed in a manned counter of the immigration inspection site. The staff S5 uses the operation terminal 62 to perform the immigration inspection procedure of the user U. Hereinafter, the immigration inspection procedure performed in the immigration inspection procedure is referred to as "authentication stage ST5". When the user U is authenticated in the authentication stage ST5, the user U moves to the customs inspection site.

The automatic customs gate apparatus 70 is installed in a customs inspection site in the airport and automatically performs a customs inspection procedure of the user U. The automatic customs gate apparatus 70 has an entrance gate terminal 71 and an exit gate terminal 72. The user U may be allowed to use the automatic customs gate apparatus 70 when the user U performs pre-registration regarding the use of the automatic customs gate apparatus 70. The operation terminal 80 is installed in a manned counter of a customs inspection site. The staff S6 uses the operation terminal 80 to perform a customs inspection procedure of the user U. Hereinafter, the customs inspection procedure performed in the customs inspection site is referred to as "authentication stage ST6". When the user U is authenticated in the authentication stage ST6, the user U exits the customs inspection site and can enter the second country.

Each of the operation terminals 22, 32, 42, 52, 62 and 80 is a terminal used by each of the staffs S1 to S6 of an airport company or an airport facility. For example, the terminal is a stationary type information processing terminal installed in a business place such as a counter or the like in which the staff engages in a business. Each operation terminal may be, for example, a portable information processing terminal such as a tablet terminal, a smartphone, or a mobile phone.

As shown in FIG. 1, the management server 10 includes a user information DB11, a travel/authentication history information DB12, and a creditworthiness information DB13. Each database needs not be a single database, and may be configured as a group of a plurality of databases using, for example, a block chain technique. It is assumed that the information stored in the user information DB11, the travel/authentication history information DB12, and the creditworthiness information DB13 is shared between the first country and the second country.

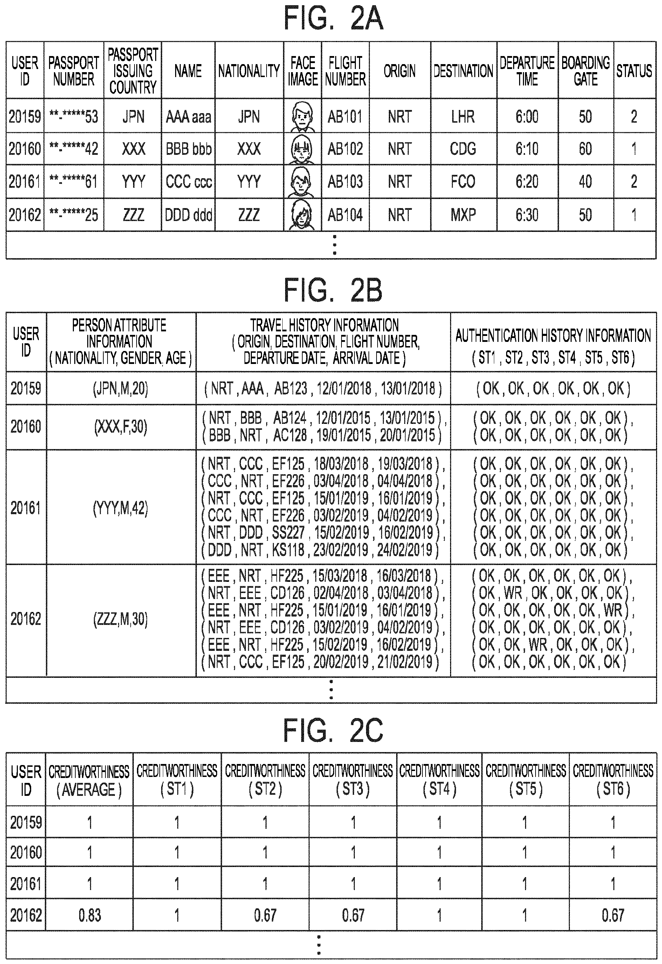

FIG. 2A is a diagram showing an example of information stored in the user information DB11. User information related to each user U is registered in the user information DB11 for each user ID which is an identifier for identifying the user U. According to the present example embodiment, the user ID is unique identification information different from the passport number.

The user information registered in the user information DB11 includes identity information such as a name of the user U and a nationality, biometrics information, and boarding information such as a flight number of the aircraft on which the user U is boarding, origin, destination, departure time, and boarding gate associated with each other. The term of the biometrics information according to the present example embodiment means a face image and a feature amount extracted from the face image, but the biometrics information is not limited to the face image and the face feature amount. That is, the biometrics authentication may be performed using a fingerprint image, a palm print image, an auricle image, an iris image, or the like as the biometrics information of the user U.

FIG. 2B is a diagram showing an example of information stored in the travel/authentication history information DB12. The travel/authentication history information DB12 includes, for each user ID, person attribute information, travel history information, and authentication history information related to each user U.

The travel history information is information related to the user U who has the travel history. The travel history information may be registered, for example, by a management station or an airline in each country when the user U enters the country or exits the country. The travel history information includes data items such as a departure place (origin), a date of leaving the country (a departure date), a flight number of aircraft, an immigration place (destination), and a date of immigration (an arrival date) about the user U. The destination and the destination may refer to an airport of immigration and an airport of departure, respectively.

Authentication history information is information about the results of authentication at multiple authentication stages that the user U has been authorized during travel. In the present example embodiment, a series of authentication stages is generically referred to as "examination". The authentication history information may be registered, for example, by a management station or an airline in each country when the user U enters the country or exits the country.

According to the present example embodiment, authentication results in each of authentication stages is defined in three levels of "OK", "-", and "WR".
The authentication result "OK" indicates that authentication has succeeded. The authentication result "-" indicates that authentication has not yet been performed. For example, when the user U is a first-time traveler, the authentication result is maintained at a value of "-" until the user U undergoes an examination. The authentication result "WR" indicates that the user U has been notified of an "attention" from the staff in the authentication stage. When authentication fails in the authentication stage, other value may be set because immigration or departure is not permitted.

Specific examples of the case where the "attention" is notified from the staff include (A) the case where an article violating the carry-in rule to the cabin of the aircraft is found in the authentication stage ST2 (security inspection procedure), and the case where the article is forfeited, and (B) the case where an undeclared article is found in the authentication stage ST6 (customs inspection procedure) and the correction of the declaration is made. Note that these are merely examples, and various cases may be included in each authentication stage. According to the present example embodiment, it is assumed that the information of the user U who has been notified of an "attention" from the staff is distinguished from the information of the person in the blacklist in which the entering/leaving a country is restricted.

FIG. 2C is a diagram showing an example of information stored in the creditworthiness information DB13. Here, the user ID and creditworthiness are set as data items in the creditworthiness information DB13. The creditworthiness is information indicating a credit level to the user U, which is evaluated based on travel history information, authentication history information, and person attribute information of the user U in the past travel (Hereinafter referred to as "the first travel"). In other words, the creditworthiness is a value representing the degree to which the user U is authenticated at each authentication stage. Specifically, in the case of a user U who has not been pointed out a problem in the examination at the time of past travel, that is, an excellent traveler, the creditworthiness of the user U is higher than that of a first-time traveler.

On the other hand, in the case of User U who was pointed out a problem in the examination at the time of past travel, the creditworthiness of the user U is lower than that of the excellent traveler or the first-time traveler. The authentication result "OK" in FIG. 2B is converted into an authentication score "1". The authentication result "WR" is converted into an authentication score "-1". The authentication result "-" is converted into an authentication score "0". The authentication result is converted for each travel, and a plurality of travels are averaged for each authentication stage. Thus, creditworthiness information shown in FIG. 2C is acquired. In FIG. 2C, it is shown that the average value of creditworthiness is not only calculated for each authentication stage, but also for all stages.

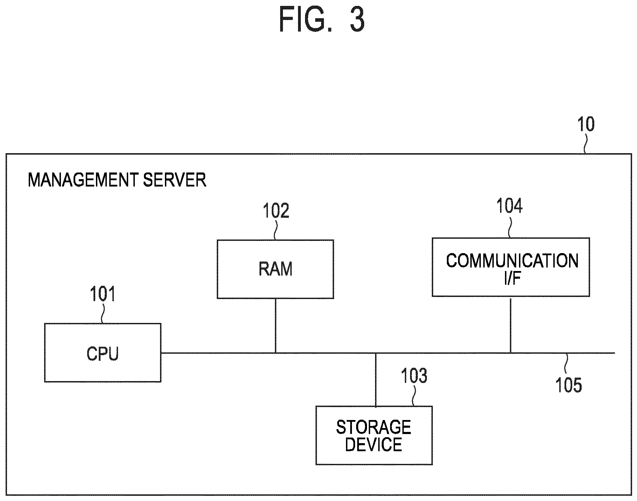

Next, with reference to FIGS. 3 to 10, an example of a hardware configuration of each device constituting the traveler control system 1 will be described. Note that, in FIGS. 3 to 10, devices having the same name but different only by reference numerals are devices having the same function, and therefore detailed description thereof is omitted in the following drawings.

FIG. 3 is a block diagram showing an example of a hardware configuration of the management server 10. As shown in the same figure, the management server 10 has a CPU (Central Processing Unit) 101, a RAM (Random Access Memory) 102, a storage device 103, and a communication I/F 104. Each device is connected to a bus line 105.

The CPU 101 is a processor having a function of performing a predetermined operation according to a program stored in the storage device 103 and controlling each part of the management server 10. In the management server 10, the CPU 101 functions as a determination unit and an output unit. The RAM 102 is formed of a volatile storage medium and provides a temporary memory area necessary for the operation of the CPU 101.

The storage device 103 is formed of a storage medium such as a nonvolatile memory, a hard disk drive, or the like, and functions as a storage unit. The storage device 103 stores a program executed by the CPU 101, data referred to by the CPU 101 in executing the program, and the like.

The communication I/F 104 is a communication interface based on standards such as Ethernet (registered trademark), Wi-Fi (registered trademark), 4G, etc., and is a module for communicating with the check-in terminal 20, etc.

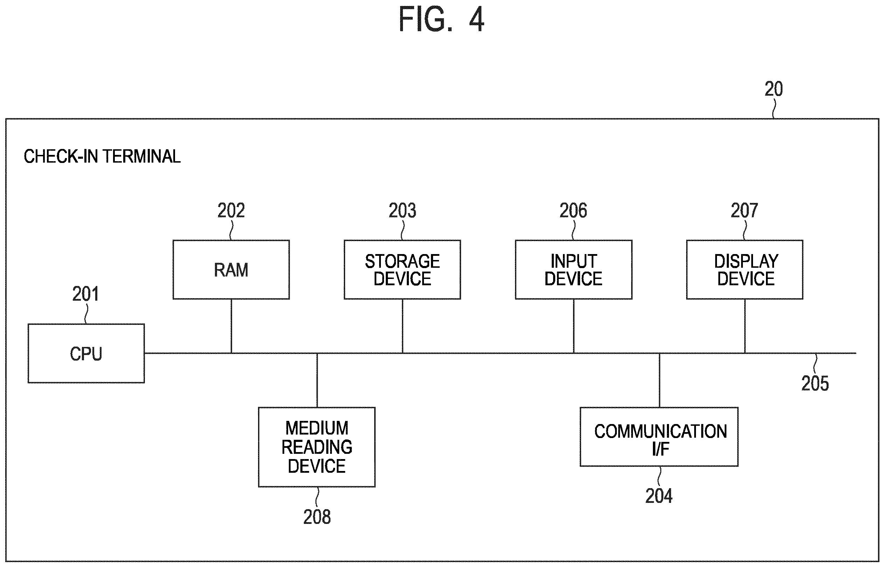

FIG. 4 is a block diagram showing an example of a hardware configuration of the check-in terminal 20. As shown in the same figure, the check-in terminal 20 has a CPU 201, a RAM 202, a storage unit 203, a communication I/F 204, an input device 206, a display device 207, and a medium reading device 208. Each device is connected to a bus line 205.

The input device 206 is, for example, a pointing device such as a touch panel or a keyboard. In the check-in terminal 20 of the present example embodiment, the display device 207 and the input device 206 are integrally formed as a touch panel. The display device 207 is a liquid crystal display device, an Organic Light Emitting Diode (OLED) display device, etc., and is used for displaying moving images, still images, characters, etc.

The medium reading device 208 is a device for reading the passport and the flight ticket medium of the user U and acquiring information recorded in the passport and the flight ticket. The flight ticket medium is, for example, a paper flight ticket or a portable terminal for displaying a copy of an e-ticket. The medium reading device 208 has, for example, a code reader, an image scanner, a non-contact integrated circuit (IC) reader, an optical character reader (OCR) device, and the like, and acquires information from various media held over by the reading unit thereof.

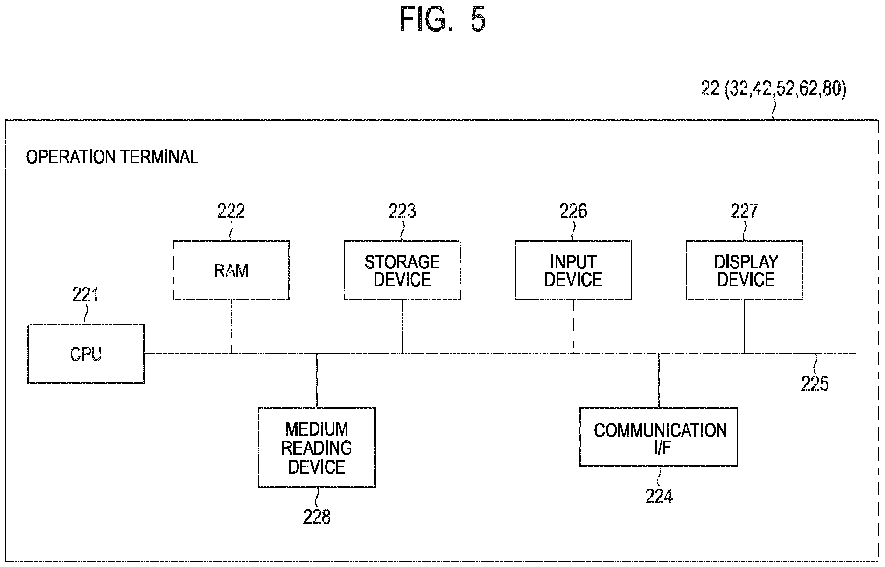

FIG. 5 is a block diagram showing an example of a hardware configuration of the operation terminal 22. As shown in the same figure, the operation terminal 22 has a CPU 221, a RAM 222, a storage unit 223, a communication I/F 224, an input device 226, a display device 227, and a medium reading device 228. Each device is connected to a bus line 225. The hardware configuration of operation terminals 32, 42, 52, 62, and 80 are the same as that of the operation terminal 22, but some devices may be omitted or other devices may be added if necessary.

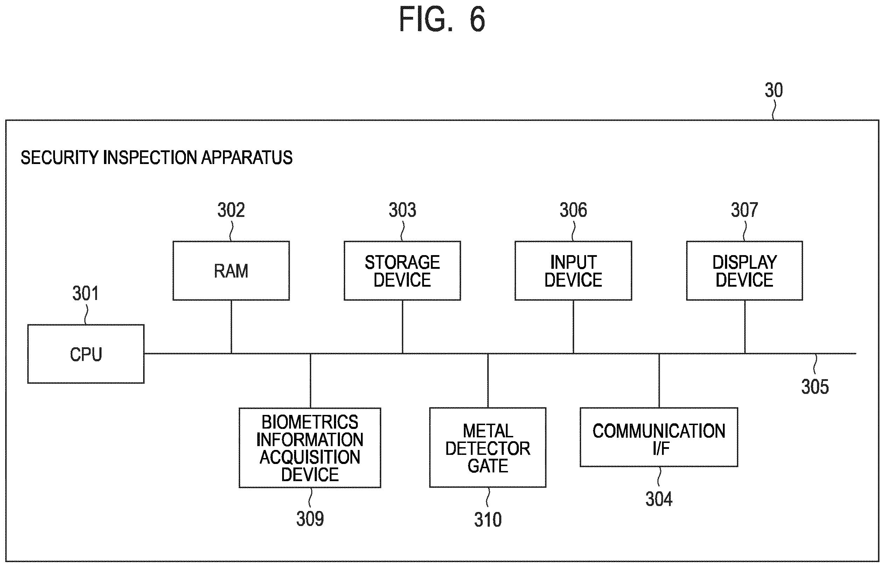

FIG. 6 is a block diagram showing an example of a hardware configuration of security inspection apparatus 30. As shown in same figure, the security inspection apparatus 30 has a CPU 301, a RAM 302, a storage unit 303, a communication I/F 304, an input device 306, a display device 307, a biometrics information acquisition device 309, and a metal detector gate 310. Each device is connected to a bus line 305.

The biometrics information acquisition device 309 is an apparatus for acquiring a face image of the user U as biometrics information of the user U. The biometrics information acquisition device 309 is, for example, a digital camera for capturing a face of the user U standing in front of the security inspection apparatus 30, and captures a face of the user U to acquire the face image.

The metal detector gate 310 is a gate type metal detector for detecting metals carried by the user U passing through the metal detector gate 310.

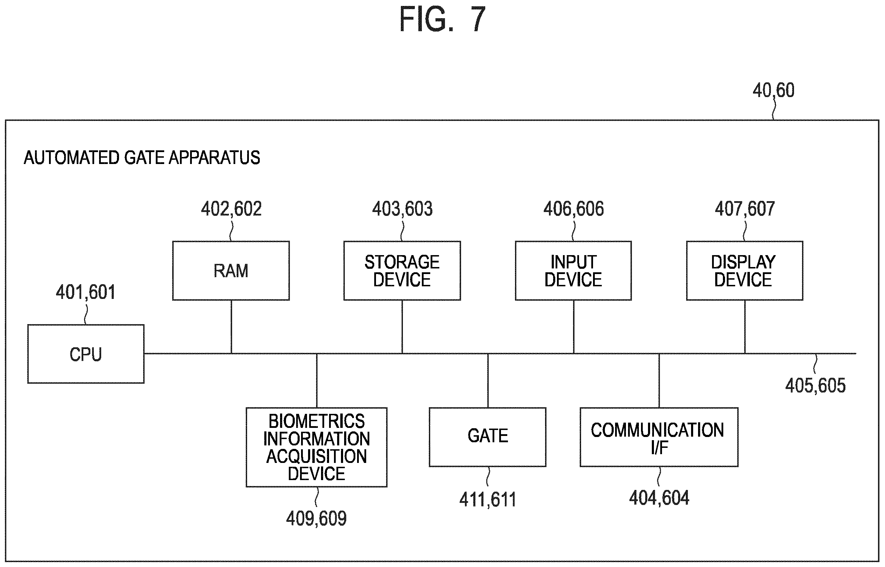

FIG. 7 is a block diagram showing an example of a hardware configuration of the automated gate apparatus 40. The automated gate apparatus 40 has a CPU 401, a RAM 402, a storage unit 403, a communication I/F 404, an input device 406, a display device 407, a biometrics information acquisition device 409, and a gate 411. Each device is connected to a bus line 405. The automated gate apparatus 60 installed in the immigration inspection site has a hardware configuration similar to that of the automated gate apparatus 40.

When identity verfication of the user U is successful in the automated gate apparatus 40 and the user U passes through the departure inspection, the gate 411 transitions from a closed state for a standby to block passage of the user U to an opened state to permit passage of the user U under the control of the CPU 401. The system of gate 411 is not particularly limited, and may be, for example, a flapper gate in which one or more flappers provided on one side or both sides of the passage are opened or closed, a turn-style gate in which three bars are revolved.

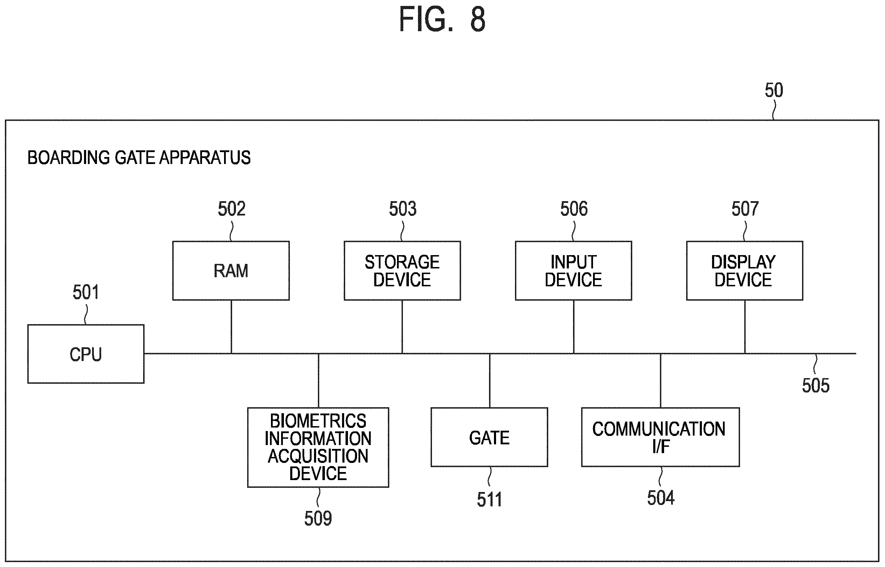

FIG. 8 is a block diagram showing an example of a hardware configuration of the boarding gate apparatus 50. As shown in the same figure, the boarding gate apparatus 50 has a CPU 501, a RAM 502, a storage unit 503, a communication I/F 504, an input device 506, a display device 507, a biometrics information acquisition device 509, and a gate 511. Each device is connected to a bus line 505.

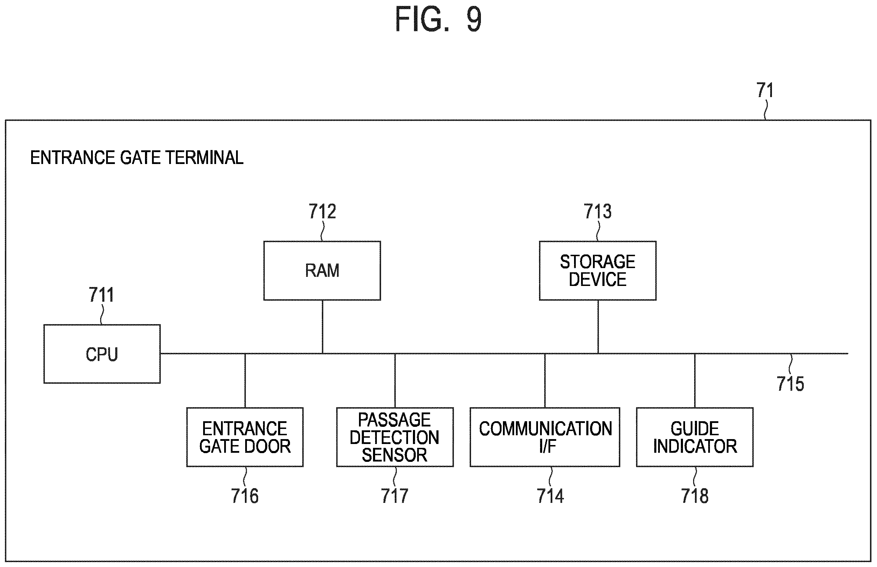

FIG. 9 is a block diagram showing an example of a hardware configuration of an entrance gate terminal 71. The entrance gate terminal 71 has a CPU 711, a RAM 712, a storage unit 713, entrance gate doors 716, a passage detection sensor 717, a communication I/F 714, and a guide indicator 718. Each device is connected to a bus line 715.

The entrance gate doors 716 are open/close doors that perform an opening operation and a closing operation under the control of the CPU 711 and transition between an opened state to permit passage of the user U and a closed state to block passage of the user U. The opening and closing scheme of the entrance gate doors 716 is not particularly limited and may be, for example, a flapper type, a slide type, a revolving type, or the like.

In response to detecting passage of the user U, each the passage detection sensor 717 outputs an output signal indicating the passage of the user U. The CPU 711 can determine whether or not the user U has passed through the entrance gate terminal 71 and entered the gate passage based on the output signals from the plurality of the passage detection sensors 717 and the output order of the output signals. The gate passage is an area between the entrance gate terminal 71 and the exit gate terminal 72.

The guide indictor 718 displays an indication indicating whether to permit entry the gate passage under the control of the CPU 711. When the entrance gate doors 716 are in an opened state, the guide indicator 718 displays an indication indicating that entry to the gate passage is permitted. Further, when the entrance gate doors 716 are in a closed state, the guide indicator 718 displays an indication indicating that entry to the gate passage is prohibited. The guide indicator 718 can display an indication indicating whether to permit entry to the gate passage by using a color indication, a symbol indication, a text indication, or the like, for example.

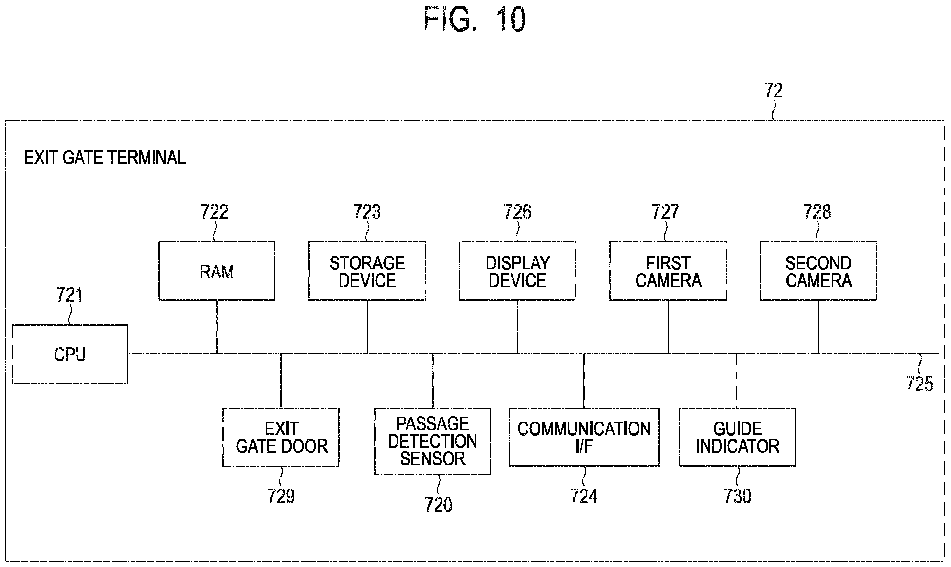

FIG. 10 is a block diagram showing an example of a hardware configuration of the exit gate terminal 72. The exit gate terminal 72 has a CPU 721, a RAM 722, a storage unit 723, a display device 726, a first camera 727, a second camera 728, exit gate doors 729, a passage detection sensor 720, a communication I/F 724 and a guide indicator 730. Each device is connected to a bus line 725.

The first camera 727 is a long-range camera that has a capturable range in at least the inside of the gate passage and can capture a more distant place than the second camera 728. The second camera 728 is a short-range camera that has a capturable range in at least a front area of the exit gate terminal 72. Note that the positions where the first camera 727 and the second camera 728 are provided are not particularly limited and may be any position that can realize respective capturable ranges.

The exit gate doors 729 are open/close doors that performs an opening operation and a closing operation under the control of the CPU 721 and transitions between a closed state to block passage of the user U and an opened state to permit passage of the user U.

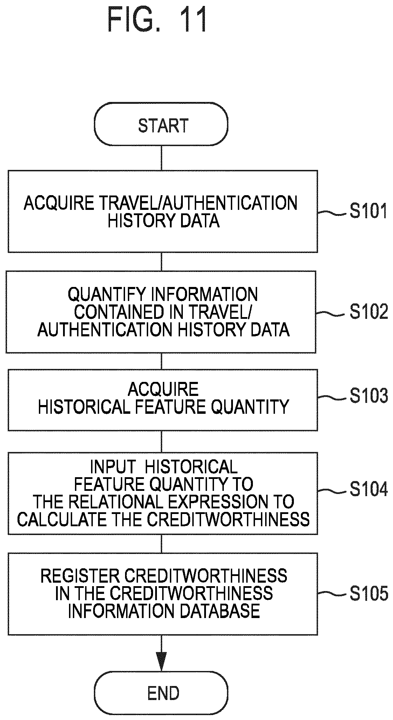

Next, the operation of each device according to the traveler control system 1 in present example embodiment will be described with reference to FIGS. 11 to 22.

FIG. 11 is a flowchart showing an example of the processing of the management server 10. This process is executed at a predetermined cycle or at the start of the examination associated with the travel of the user U.

First, the management server 10 acquires travel/authentication history data (travel history information, authentication history information, and person attribute information) from the travel/authentication history information DB12 for each traveler ID (step S101).

Next, the management server 10 quantifies the travel history information, the authentication history information, and the person attribute information contained in the travel/authentication history data (step S102).

Next, the management server 10 acquires a historical feature quantity represented by a vector from data obtained by quantifying the travel history information, the authentication history information, and the person attribute information (step S103).

Next, the management server 10 inputs the historical feature quantity to a predetermined relational expression to calculate creditworthiness of the user U (step S104).

The management server 10 registers the calculated creditworthiness in creditworthiness information DB13 in association with the user ID (step S105).

Specific examples of the calculation method of the historical feature quantity include the following three (A) to (C). Here, a case will be described in which the record relating to the user U acquired from the travel/authentication history information DB12 shown in FIG. 2B is in the form of {person attribute information (nationality/gender/age), travel history information (origin/destination/flight number/departure date /arrival date), and authentication history information (ST1/ST2/ST3/ST4/ST5/ST6)}. However, the calculation method is not limited to these methods.

(A) When using authentication history information only:
As shown in FIG. 2B, the authentication history information {ST1/ST2/ST3/ST4/ST5/ST6} relating to the user U whose traveler ID is "20159" is {OK, OK, OK, OK, OK, OK}. Here, when the authentication result of "OK" is quantified to "1", the authentication result of "Caution" is quantified to "-1", and the authentication result of "Not authenticated" is quantified to "0", the authentication history information become {1 /1 /1 /1 /1 /1}. When authentication history information is vectorized, vectors (1, 1, 1, 1, 1, 1) are obtained as historical feature quantities.

When the number of times of traveling is plural, the authentication result can use the average value of the authentication score in each authentication stage as a historical feature quantity. For example, when the historical feature quantities of (1, 1, 1, 1, 1, 1) and (1, -1, 1, 1, 1, -1) are obtained from the authentication history information in two travels, the historical feature quantities may be averaged to be (1, 0, 1, 1, 1, 0). Instead of using the authentication history information of all the past travels, a limited scope of calculation such as the most recent five travels or within the past three years may be used. The same applies to the case where the number of travels three or more travels.

(B) When using travel/authentication history information:
The travel history information {origin/destination/flight number/departure date/arrival date} concerning User U whose traveler ID is "20159" is {NRT, AAA, AB123, 12/01/2018, 13/01/2018}. For origin and destination, airports in countries are classified into one of the prescribed classification and quantified. For example, it is quantified as "0.8" at airports in Japan (NRT), "1" at airports with stricter examination standard than Japan, and "0.6" at airports with looser examination standard than Japan. For example, if the examination standard at the airport of the arrival country (AAA) is looser than that of Japan, the travel history information {origin/destination} of the traveler ID is {0.8/0.6}. The vector (0.8, 0.6, 1, 1, 1, 1, 1, 1, 1, 1) is obtained by aggregating this with the historical feature quantity relating to the authentication history information obtained in (A).

(C) When using person attribute information, travel history information, and authentication history information: The person attribute information {nationality/gender/age} related to the user U whose traveler ID is "20159" is {JPN, M, 20}. For example, a case will be described in which the historical feature quantity is obtained for the age out of the person attribute information. Here, it is quantified so as to be "1" when the age is 0 to 15, "0.7" when the age is 16 to 60, and "0.9" when the age is 61 years or older. The person attribute information about the user U whose traveler ID is "20159" is {0.7}. Then, vectors (0.7, 0.8, 0.6, 1, 1, 1, 1, 1, 1, 1, 1, 1) are obtained as historical feature quantities by aggregating the historical feature quantities relating to the travel history information and the authentication history information obtained in (A) and (B) .

Specific examples of the algorithm for calculating creditworthiness from the historical feature quantity include the following three algorithms (D) to (F). However, the available algorithms shall not be limited to these.

(D) Calculation method by averaging:
Assuming that the creditworthiness is T, and the historical feature quantity is (F (1), F (2), ···, F (n -1), F (n)) that are based on the data of m ($\geq$ 2) items, the creditworthiness T can be calculated by, for example, the following relational expression (1).

$$T = \sum_{k=1}^{n} F(k) \Big/ n \quad \dots \quad (1)$$

(E) Calculation method by addition:
The creditworthiness T can be calculated by, for example, the following relational expression (2).

$$T = \sum_{k=1}^{n} F(k) \quad \dots \quad (2)$$

(F) Weighted Average Calculation Method:
Assuming that the weights of the items (1) to (n) are W (1) to W (n), the creditworthiness T can be calculated by, for example, the following expression (3).

$$T = \sum_{k=1}^{n} F(k) \cdot \text{w}(k) \Big/ n \quad \dots \quad (3)$$

In this case, the weights W (1) to W (n) can be set freely. For example, the weights of authentication stage ST2 (security inspection procedure) and ST6 (customs inspection procedure) may be set to a value larger than the weight of authentication stage ST1 (check-in procedure).

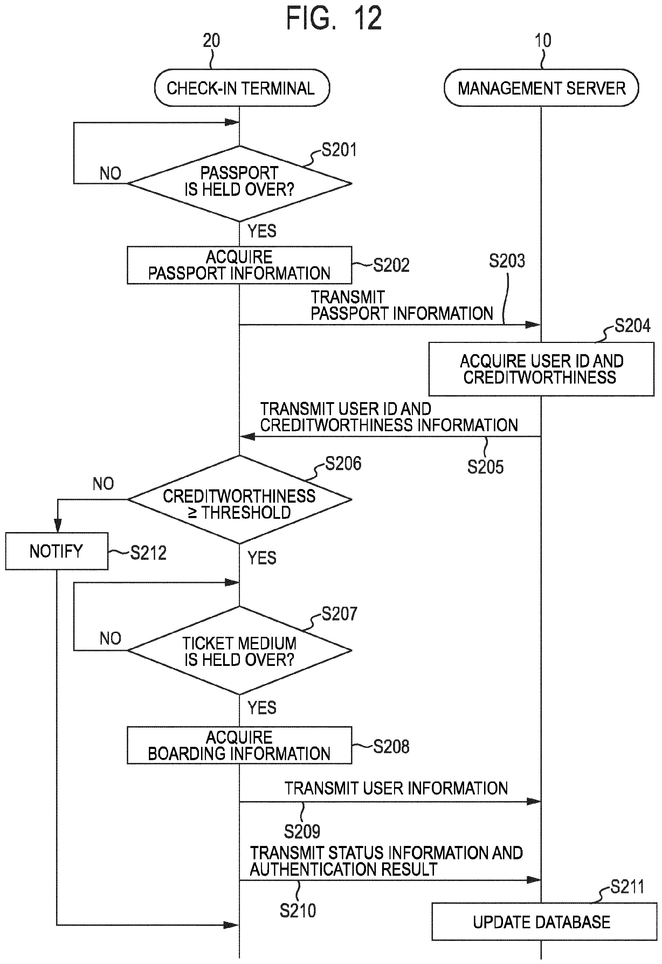

FIG. 12 is a sequence diagram showing an example of processing of the check-in terminal 20 and the management server 10. This process is executed each time the user U undergoes the check-in procedure using the check-in terminal 20. Hereinafter, a case where a passport is selected on the reservation information search screen will be described as an example.

First, the check-in terminal 20 determines whether or not the passport of the user U is held over the reading unit (not shown) of the medium reading device 208 (step S201), and waits until the passport is held over the reading unit (NO in step S201).

Next, when the check-in terminal 20 determines that the passport is held over the reading unit of the medium reading device 208 (YES in step S201), the check-in terminal 20 acquires passport information of the user U from the held passport (step S202). The acquired passport information includes information on a passport number and a passport issuing country of the user U, and the like. At this time, the medium reading device 208 can also acquire identity information on the user U from the passport.

Next, the check-in terminal 20 transmits the acquired passport information to the management server 10 (step S203). Upon receiving the passport information from the check-in terminal 20, the management server 10 acquires creditworthiness information of the user U using the passport number included in the passport information as a key (step S204). The creditworthiness information includes the user ID of the user U and the creditworthiness. The management server 10 transmits the creditworthiness information of the user U to the check-in terminal 20 (step S205).

Next, upon receiving creditworthiness information of the user U from management server 10, the check-in terminal 20 compares the creditworthiness of the user U included in the creditworthiness information with a predetermined threshold (reference value) (step S206). When the check-in terminal 20 determines that creditworthiness of the user U is equal to or greater than the predetermined threshold (YES in step S206), the process proceeds to step S207. On the other hand, when the check-in terminal 20 determines that the creditworthiness of the user U is less than the predetermined threshold (NO in step S206), the check-in terminal 20 notifies the user U of the guidance message (step S212), and ends the process.

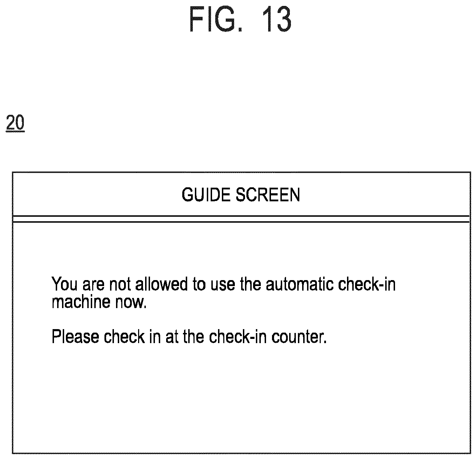

FIG. 13 is a diagram showing an example of a screen displayed by check-in terminal 20. Here, a guidance message "You are not allowed to use the automatic check-in machine now. Please check in at the check-in counter." is displayed on the screen.

Next, the check-in terminal 20 determines whether or not the flight ticket medium of the user U is held over the reading unit of the medium reading device 208 (step S207), and waits until the flight ticket medium is held over (NO in step S207).

Next, when the check-in terminal 20 determines that the flight ticket medium is held over the reading unit of the medium reading device 208 (YES in step S207), the check-in terminal 20 acquires boarding information of the user U from the held flight ticket medium (step S208). At this time, the medium reading device 208 can acquire the boarding information (name, flight number, boarding date, boarding airport, arrival airport, boarding time, arrival time, etc.) of the user U from the flight ticket medium.

The check-in terminal 20 transmits user information to management server 10 (step S209), and transmits status information indicating that the check-in procedure has been completed and the authentication result to management server 10 (step S210). Upon receiving the information from the check-in terminal 20, the management server 10 updates the user information DB11 and the travel/authentication history information DB12 (step S211), respectively. Specifically, the status of the user information DB11 is updated to "check-in procedure completed: 1" with the user ID as a key, and the registered face image is updated with the passport face image. The authentication result of the user U with respect to authentication stage ST1 in the travel/authentication history information DB12 is updated by using the user ID as a key. Thus, by registering the passport face image acquired from the passport in check-in procedure as a registered face image in the user information DB11, the subsequent authentication stage can perform matching process between the captured face image and the registered face image. That is, the user ID associated with the registered face image is identification information that is commonly available in all authentication stage. By using such a common user ID, the examination for the user U can be made efficient. Although the present example embodiment does not capture a face image of the user U at the time of the check-in procedure, as with other authentication stage described later, the face image may be captured at check-in terminal 20. In this case, it is preferable to execute the matching process with the passport face image, and separately register both the passport face image and the captured image in the user information DB11 on condition that the matching process succeeds.

[Security Inspection Procedure]

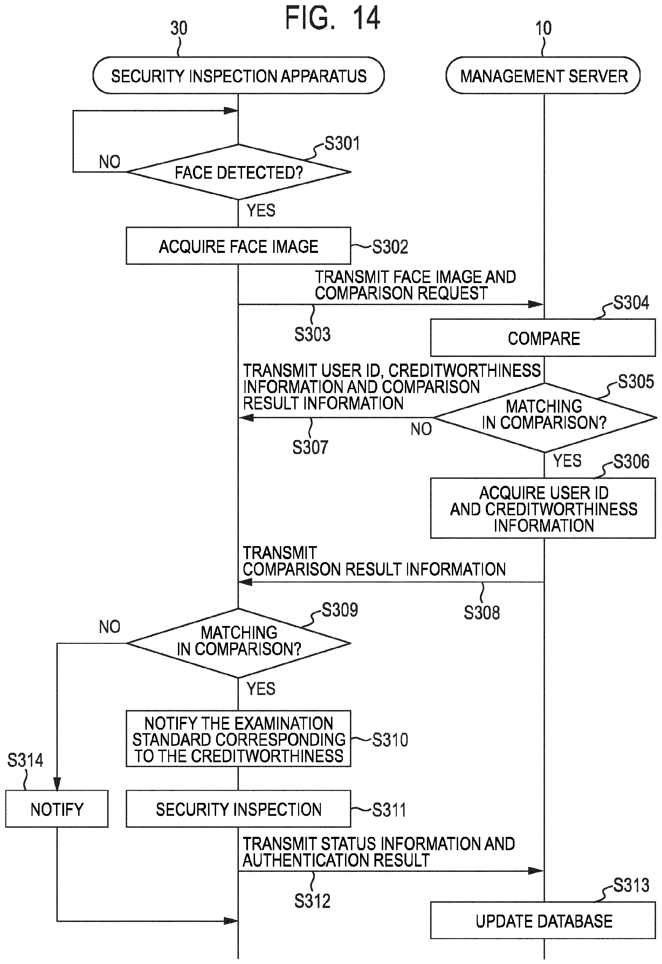

FIG. 14 is a sequence diagram showing an example of processing of the security inspection apparatus 30 and the management server 10. This process is executed when the user U who has completed check-in procedure undergoes the security inspection procedure.

The security inspection apparatus 30 constantly or periodically captures the front of the metal detector gate 310, and determines whether the face of the user U standing in front of the metal detector gate 310 is detected in the captured image (step S301). The security inspection apparatus 30 waits until the face of the user U is detected in the image by the biometrics information acquisition device 309 (NO in step S301).

When the security inspection apparatus 30 determines that the face of the user U is detected by the biometrics information acquisition device 309 (YES in step S301), the security inspection apparatus 30 captures a face of the user U and acquires face image of the user U as a target face image (step S302).

Next, the security inspection apparatus 30 transmits the target face image of the user U captured by the biometrics information acquisition device 309 together with the comparison request to the management server 10 via the network NW (step S303). Thus, the security inspection apparatus 30 requests the management server 10 to compare the target face image of the user U captured by the biometrics information acquisition device 309 with the plurality of registered face images registered in the user information DB11 of the management server 10 with one to N matching.

Upon receiving the target face image and the comparison request from the security inspection apparatus 30, the management server 10 compares the face image of the user U (step S304). That is, the management server 10 compares the target face image received from the security inspection apparatus 30 with the plurality of registered face images registered in the user information DB11 with one to N matching.

Here, as a result of the comparison, if the management server 10 determines that there is no matching in the comparison (NO in step S305), the management server 10 transmits the comparison result information to the security inspection apparatus 30 (step S307), and the process proceeds to step S309. On the other hand, as a result of the comparison, if the management server 10 determines that there is a matching in the comparison (YES in step S305), the process proceeds to step S306. In step S306, the management server 10 acquires a user ID from the user information DB11 based on the registered face image being matched, and also acquires the creditworthiness information from the creditworthiness information DB13 using the user ID as a key. Then, the management server 10 transmits the user ID and the creditworthiness information acquired together with the comparison result information to the security inspection apparatus 30 (step S308).

Next, as a result of the comparison, if the security inspection apparatus 30 determines that there is a matching in the comparison (YES in step S309), the security inspection apparatus 30 displays notification information including an examination standard corresponding to the creditworthiness of the user U on the display device 307 (step S310), and executes security inspection process of the user U (step S311). In the security inspection process, the CPU 301 controls each unit of the security inspection apparatus 30. Thus, the security inspection apparatus 30 detects metals carried by the user U passing through the metal detector gate 310. The user U passing through the metal detector gate 310 goes toward the departure inspection site.

Next, the security inspection apparatus 30 transmits the status information indicating that the security inspection procedure of the user U is completed through the matching process of the face image, and the authentication result to the management server 10 via the network NW (step S312) .

Upon receiving the status information and the authentication result from the security inspection apparatus 30, the management server 10 updates the user information DB11 and the travel/authentication history information DB12, respectively (step S313). Specifically, the management server 10 updates the status of the user information DB11 to "security inspection procedure completion: 2" using the user ID as a key. Further, the management server 10 updates the authentication result regarding the authentication stage ST2 of the user U in the travel/authentication history information DB12 using the user ID as a key.

On the other hand, as a result of the comparison, if the security inspection apparatus 30 determines that there is no matching in the comparison by the management server 10 (NO in step S309), the security inspection apparatus 30 notifies the user U that the identity verification has failed (step S314). For example, the security inspection apparatus 30 causes the display device 307 to display a notification screen for notifying that identity verification has failed.

[Departure Inspection Procedure]

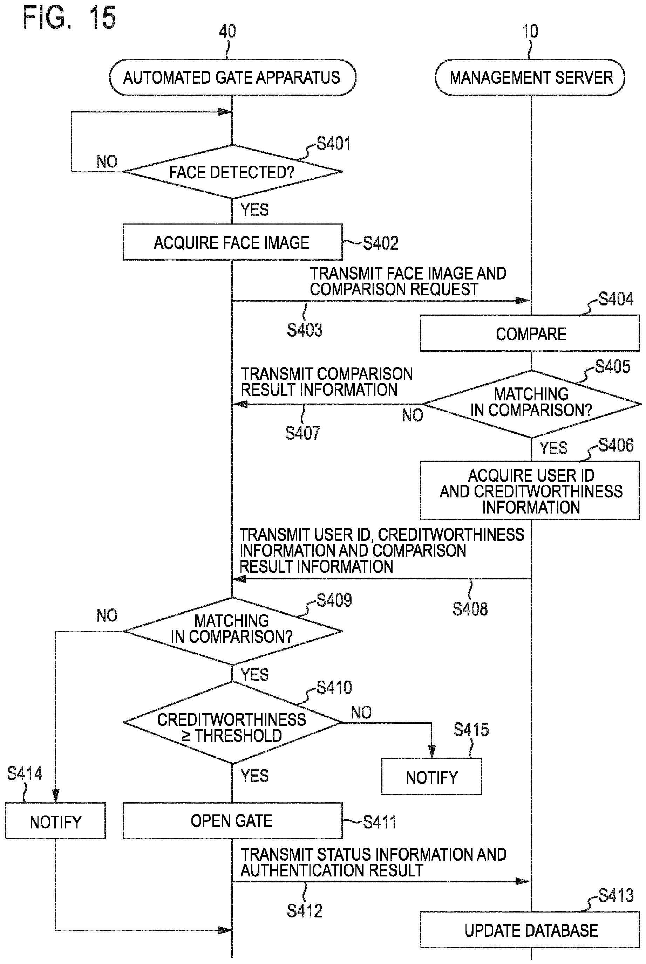

FIG. 15 is a sequence diagram showing operations of the automated gate apparatus 40 and the management server 10. This process is executed when the user U who has completed the security inspection procedure undergoes the departure inspection procedure.

The user U, who has completed security inspection procedure, goes to the departure inspection site and undergoes the departure inspection procedure at the automated gate apparatus 40. The automated gate apparatus 40 and the management server 10 execute the processing shown in FIG. 15 each time a plurality of users U undergoes the departure inspection procedure, respectively.

The automated gate apparatus 40 constantly or periodically captures an image of the front of the device by the biometrics information acquisition device 409, and determines whether or not the face of the user U is detected in the captured image (step S401). The automated gate apparatus 40 waits until the face of the user U is detected in the image by the biometrics information acquisition device 409 (NO in step S401).

When the automated gate apparatus 40 determines that the face of the user U is detected by the biometrics information acquisition device 409 (YES in step S401), the automated gate apparatus 40 captures a face of the user U to acquire a face image of the user U as a target biometrics authentication image (step S402).

Next, the automated gate apparatus 40 transmits the target face image of the user U captured by the biometrics information acquisition device 409 together with the comparison request to the management server 10 via the network NW (step S403). Thus, the automated gate apparatus 40 requests the management server 10 to compare the target face image of the user U captured by the biometrics information acquisition device 409 with the plurality of registered face images registered in the user information DB11 of the management server 10 with one to N matching.

Upon receiving the target face image and the comparison request from the automated gate apparatus 40, the management server 10 compares the face image of the user U (step S404). That is, the management server 10 compares the target face image received from the automated gate apparatus 40 with the plurality of registered face images registered in the user information DB11 with one to N matching.

Here, as a result of the comparison, if the management server 10 determines that there is no matching in the comparison (NO in step S405), the management server 10 transmits the comparison result information to the automated gate apparatus 40 (step S407), and the process proceeds to step S409. On the other hand, as a result of the comparison, if the management server 10 determines that there is a matching in the comparison (YES in step S405), the process proceeds to step S406.

In step S406, the management server 10 acquires a user ID from the user information DB11 based on the registered face image being matched, and also acquires the creditworthiness information from the creditworthiness information DB13 using the user ID as a key. Then, the management server 10 transmits the user ID and the creditworthiness information acquired together with the comparison result information to the automated gate apparatus 40 (step S408).

Next, as a result of the comparison, if the automated gate apparatus 40 determines that there is a matching in the comparison (YES in step S409), the automated gate apparatus 40 determines whether or not the creditworthiness is equal to or greater than a predetermined threshold (step S410). When the automated gate apparatus 40 determines that the creditworthiness is equal to or greater than the predetermined threshold (YES in step S410), the automated gate apparatus 40 opens the gate 411 (step S411). On the other hand, when the automated gate apparatus 40 determines that the creditworthiness is less than the predetermined threshold (NO in step S410), the automated gate apparatus 40 notifies the error information (step S415). For example, the automated gate apparatus 40 displays a notification screen including a message such as "Please undergo the departure inspection procedure at a manned counter." on the display device 407.

Next, the automated gate apparatus 40 transmits the status information indicating that the departure inspection procedure of the user U is completed through the matching process of the face image, and the authentication result to the management server 10 via the network NW (step S412).

Upon receiving the status information and the authentication result from the automated gate apparatus 40, the management server 10 updates the user information DB11 and the travel/authentication history information DB12, respectively (step S413). Specifically, the management server 10 updates the status of the user information DB11 to "departure inspection procedure completion: 3" using the user ID as a key. Further, the management server 10 updates the authentication result regarding the authentication stage ST3 of the user U in the travel/authentication history information DB12 using the user ID as a key.

On the other hand, as a result of the comparison, if the automated gate apparatus 40 determines that there is no matching in the comparison by the management server 10 (NO in stet S409), the automated gate apparatus 40 notifies the user U that the identity verification has failed (step S414). For example, the automated gate apparatus 40 causes the display device 407 to display a notification screen for notifying that identity verification has failed.

[Boarding Procedure to an aircraft]

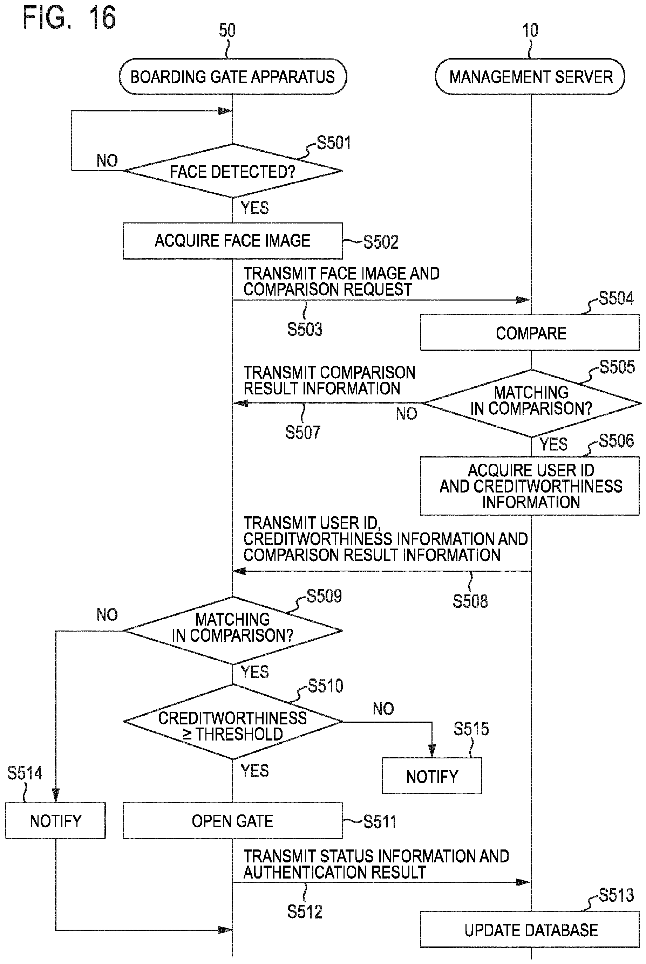

FIG. 16 is a sequence diagram showing operations of the boarding gate apparatus 50 and the management server 10.

The boarding gate apparatus 50 constantly or periodically captures an image of the front of the device by the biometrics information acquisition device 509, and determines whether or not the face of the user U is detected in the captured image (step S501). The boarding gate apparatus 50 waits until the face of the user U is detected in the image by the biometrics information acquisition device 509 (NO in step S501).

When the boarding gate apparatus 50 determines that the face of the user U is detected by the biometrics information acquisition device 509 (YES in step S501), the boarding gate apparatus 50 captures a face of the user U to acquire a face image of the user U as a target face image (step S502).

Next, the boarding gate apparatus 50 transmits the target face image of the user U captured by the biometrics information acquisition device 509 together with the comparison request to the management server 10 via the network NW (step S503). Thus, the boarding gate apparatus 50 requests the management server 10 to compare the target face image of the user U captured by the biometrics information acquisition device 509 with the plurality of registered face images registered in the user information DB11 of the management server 10 with one to N matching.

Upon receiving the target face image and the comparison request from the boarding gate apparatus 50, the management server 10 compares the face image of the user U (step S504). That is, the management server 10 compares the target face image received from the boarding gate apparatus 50 with the plurality of registered face images registered in the user information DB11 with one to N matching.

Here, as a result of the comparison, if the management server 10 determines that there is no matching in the comparison (NO in step S505), the management server 10 transmits the comparison result information to the boarding gate apparatus 50 (step S507), and the process proceeds to step S509. On the other hand, as a result of the comparison, if the management server 10 determines that there is a matching in the comparison (YES in step S505), the process proceeds to step S506.

In step S506, the management server 10 acquires a user ID from the user information DB11 based on the registered face image being matched, and also acquires the creditworthiness information from the creditworthiness information DB13 using the user ID as a key. Then, the management server 10 transmits the user ID and the creditworthiness information acquired together with the comparison result information to the boarding gate apparatus 50 (step S508).

Next, as a result of the comparison, if the boarding gate apparatus 50 determines that there is a matching in the comparison (YES in step S509), the boarding gate apparatus 50 determines whether or not the creditworthiness is equal to or greater than a predetermined threshold (step S510). When the boarding gate apparatus 50 determines that the creditworthiness is equal to or greater than the predetermined threshold (YES in step S510), the boarding gate apparatus 50 opens the gate 511 (step S511). On the other hand, when the boarding gate apparatus 50 determines that the creditworthiness is less than the predetermined threshold (NO in step S510), the boarding gate apparatus 50 notifies the error information (step S515). For example, the boarding gate apparatus 50 displays a notification screen including a message such as "Please undergo the boarding procedure at a manned counter." on the display device 507.

Next, the boarding gate apparatus 50 transmits the status information indicating that the boarding procedure of the user U is completed through the matching process of the face image, and the authentication result to the management server 10 via the network NW (step S512).

Upon receiving the status information and the authentication result from the boarding gate apparatus 50, the management server 10 updates the user information DB11 and the travel/authentication history information DB12, respectively (step S513). Specifically, the management server 10 updates the status of the user information DB11 to "boarding procedure completion: 4" using the user ID as a key. Further, the management server 10 updates the authentication result regarding the authentication stage ST4 of the user U in the travel/authentication history information DB12 using the user ID as a key.

On the other hand, as a result of the comparison, if the boarding gate apparatus 50 determines that there is no matching in the comparison by the management server 10 (NO in step S509), the boarding gate apparatus 50 notifies the user U that the identity verification has failed (step S514). For example, the boarding gate apparatus 50 causes the display device 507 to display a notification screen for notifying that identity verification has failed.

[Immigration Inspection Procedure]

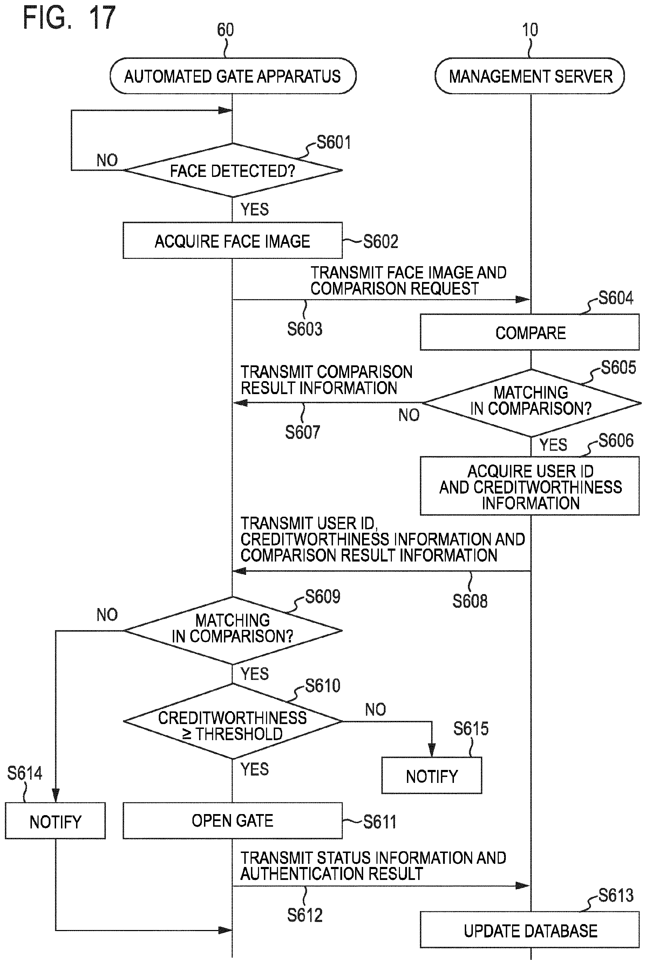

FIG. 17 is a sequence diagram showing operations of the automated gate apparatus 60 and the management server 10. This process is executed when the user U arriving in the second country undergoes the immigration inspection procedure.

The automated gate apparatus 60 constantly or periodically captures an image of the front of the device by the biometrics information acquisition device 609, and determines whether or not the face of the user U is detected in the captured image (step S601). The automated gate apparatus 60 waits until the face of the user U is detected in the image by the biometrics information acquisition device 609 (step S601, NO).

When the automated gate apparatus 60 determines that the face of the user U is detected by the biometrics information acquisition device 609 (YES in step S601), the automated gate apparatus 60 captures a face of the user U to acquire a face image of the user U as a target face image (step S602).

Next, the automated gate apparatus 60 transmits the target face image of the user U captured by the biometrics information acquisition device 609 together with the comparison request to the management server 10 via the network NW (step S603). Thus, the automated gate apparatus 60 requests the management server 10 to compare the target face image of the user U captured by the biometrics information acquisition device 609 with the plurality of registered face images registered in the user information DB11 of the management server 10 with one to N matching.

Upon receiving the target face image and the comparison request from the automated gate apparatus 60, the management server 10 compares the face image of the user U (step S604). That is, the management server 10 compares the target face image received from the automated gate apparatus 60 with the plurality of registered face images registered in the user information DB11 with one to N matching.

Here, as a result of the comparison, if the management server 10 determines that there is no matching in the comparison (NO in step S605), the management server 10 transmits the comparison result information to the automated gate apparatus 60 (step S607), and the process proceeds to step S609. On the other hand, as a result of the comparison, if the management server 10 determines that there is a matching in the comparison (YES in step S605), the process proceeds to step S606.

In step S606, the management server 10 acquires a user ID from the user information DB11 based on the registered face image being matched, and also acquires the creditworthiness information from the creditworthiness information DB13 using the user ID as a key. Then, the management server 10 transmits the user ID and the creditworthiness information acquired together with the comparison result information to the automated gate apparatus 60 (step S608).

Next, as a result of the comparison, if the automated gate apparatus 60 determines that there is a matching in the comparison (YES in step S609), the automated gate apparatus 60 determines whether or not the creditworthiness is equal to or greater than a predetermined threshold (step S610). When the automated gate apparatus 60 determines that the creditworthiness is equal to or greater than the predetermined threshold (YES in step S610), the automated gate apparatus 60 opens the gate 611 (step S611). On the other hand, when the automated gate apparatus 60 determines that the creditworthiness is less than the predetermined threshold (step S610, NO), the automated gate apparatus 60 notifies the error information (step S615). For example, the automated gate apparatus 60 displays a notification screen including a message such as "Please undergo the immigration inspection procedure at a manned counter." on the display device 607.

Next, the automated gate apparatus 60 transmits the status information indicating that the immigration inspection procedure of the user U is completed through the matching process of the face image, and the authentication result to the management server 10 via the network NW (step S612).

Upon receiving the status information and the authentication result from the automated gate apparatus 60, the management server 10 updates the user information DB11 and the travel/authentication history information DB12, respectively (step S613). Specifically, the management server 10 updates the status of the user information DB11 to "immigration inspection procedure completion: 5" using the user ID as a key. Further, the management server 10 updates the authentication result regarding the authentication stage ST5 of the user U in the travel/authentication history information DB12 using the user ID as a key.

On the other hand, as a result of the comparison, if the automated gate apparatus 60 determines that there is no matching in the comparison by the management server 10 (NO in step S609), the automated gate apparatus 60 notifies the user U that the identity verification has failed (step S614). For example, the automated gate apparatus 60 causes the display device 607 to display a notification screen for notifying that identity verification has failed.

[Customs Inspection Procedure]

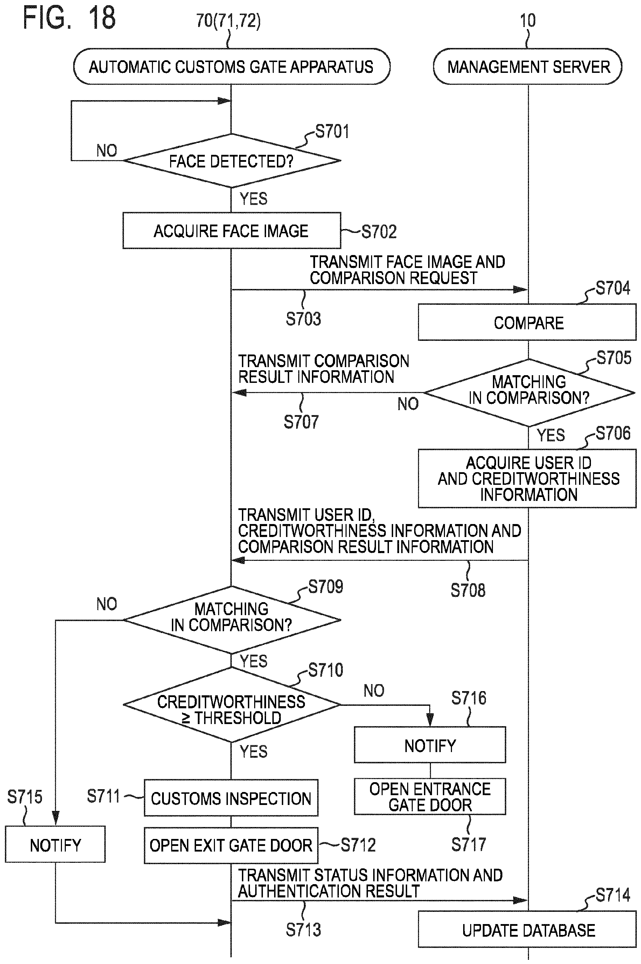

FIG. 18 is a sequence diagram showing operations of the automatic customs gate apparatus 70 and the management server 10. This process is executed when the user U who has completed the immigration inspection procedure undergoes the customs inspection procedure. Hereinafter, a process when the user U is present in the gate passage between the entrance gate door 716 (the entrance gate terminal 71) and the exit gate door 729 (the exit gate terminal 72) of the automatic customs gate apparatus 70 will be described.

The automatic customs gate apparatus 70 constantly or periodically captures an image of the gate passage by the second camera 728, and determines whether or not the face of the user U is detected in the captured image (step S701). The automatic customs gate apparatus 70 waits until the face of the user U is detected in the image (step S701, NO).

When the automatic customs gate apparatus 70 determines that the face of the user U is detected in the image (YES in step S701), the automatic customs gate apparatus 70 captures a face of the user U to acquire a face image of the user U as a target face image (step S702).

Next, the automatic customs gate apparatus 70 transmits the captured target face image of the user U together with the comparison request to the management server 10 via the network NW (step S703). Thus, the automatic customs gate apparatus 70 requests the management server 10 to compare the captured target face image of the user U with the plurality of registered face images registered in the user information DB11 of the management server 10 with one to N matching.

Upon receiving the target face image and the comparison request from the automatic customs gate apparatus 70, the management server 10 compares the face image of the user U (step S704). That is, the management server 10 compares the target face image received from the automatic customs gate apparatus 70 with the plurality of registered face images registered in the user information DB11 with one to N matching.

Here, as a result of the comparison, if the management server 10 determines that there is no matching in the comparison (NO in step S705), the management server 10 transmits the comparison result information to the automatic customs gate apparatus 70 (step S707), and the process proceeds to step S709. On the other hand, as a result of the comparison, if the management server 10 determines that there is a matching in the comparison (YES in step S705), the process proceeds to step S706.

In step S706, the management server 10 acquires a user ID from the user information DB11 based on the registered face image being matched, and also acquires the creditworthiness information from the creditworthiness information DB13 using the user ID as a key. Then, the management server 10 transmits the acquired user ID and creditworthiness information together with the comparison result information to the automatic customs gate apparatus 70 (step S708).

Next, as a result of the comparison, if the automatic customs gate apparatus 70 determines that there is a matching in the comparison (YES in step S709), the automatic customs gate apparatus 70 determines whether or not the creditworthiness is equal to or greater than a predetermined threshold (step S710). When the automatic customs gate apparatus 70 determines that the creditworthiness is equal to or greater than the predetermined threshold (YES in step S710), the automatic customs gate apparatus 70 executes a customs inspection process (step S711). If there is no problem in the inspection, the automatic customs gate apparatus 70 (exit gate terminal 72) opens the exit gate door 729 (step S712). On the other hand, when the automatic customs gate apparatus 70 determines that the creditworthiness is less than the predetermined threshold (NO in step S710), the automatic customs gate apparatus 70 notifies the error information (step S716). For example, the automatic customs gate apparatus 70 displays a notification screen including a message such as "Please undergo the customs inspection procedure at a manned counter." on the display device 726. Then, the automatic customs gate apparatus 70 (entrance gate terminal 71) opens the entrance gate door 716 (step S717).

Next, the automatic customs gate apparatus 70 transmits the status information indicating that the customs inspection procedure of the user U is completed through the matching process of the face image, and the authentication result to the management server 10 via the network NW (step S713).

Upon receiving the status information and the authentication result from the automatic customs gate apparatus 70, the management server 10 updates the user information DB11 and the travel/authentication history information DB12, respectively (step S714). Specifically, the management server 10 updates the status of the user information DB11 to "customs inspection procedure completion: 6" using the user ID as a key. Further, the management server 10 updates the authentication result regarding the authentication stage ST6 of the user U in the travel/authentication history information DB12 using the user ID as a key.

On the other hand, as a result of the comparison, if the automatic customs gate apparatus 70 determines that there is no matching in the comparison by the management server 10 (NO in step S709), the automatic customs gate apparatus 70 notifies the user U that the identity verification has failed (step S715). For example, the automatic customs gate apparatus 70 causes the display device 726 to display a notification screen for notifying that identity verification has failed.

Next, processing between the management server 10 and the operation terminals 22, 32, 42, 52, 62 and 80 will be described.

In the following description, the operation terminal 32 installed in the security inspection site (authentication stage ST2) will be described as a representative example.

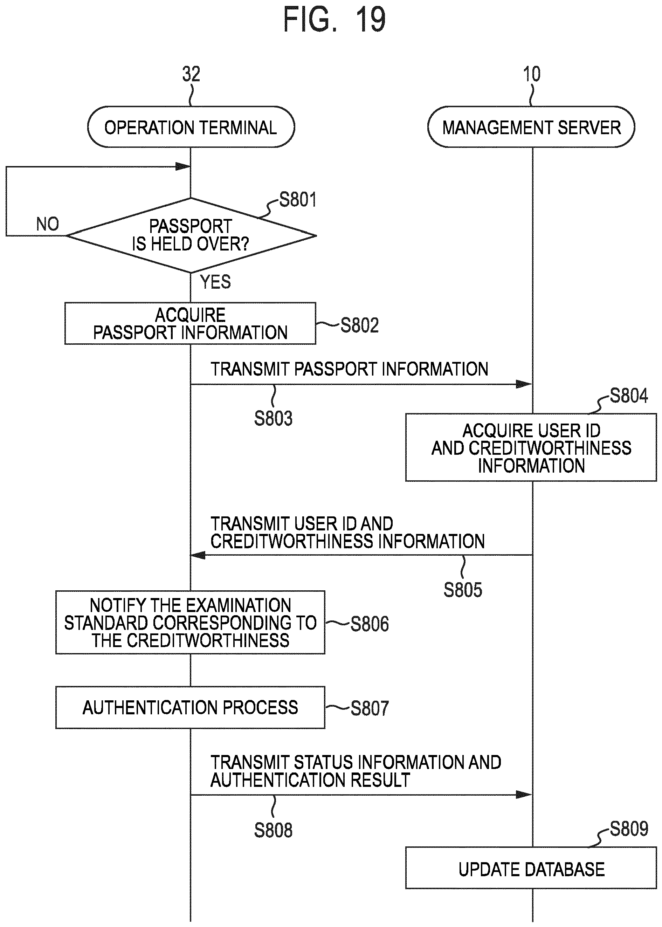

FIG. 19 is a sequence diagram showing an example of processing of the management server 10 and the operation terminal 32.

First, the operation terminal 32 determines whether or not the passport of the user U is held over a reading unit (not shown) of the medium reading device 228 (step S801), and waits until the passport is held over (NO in step S801) .

Next, when the operation terminal 32 determines that the passport is held over the reading unit of the medium reading device 228 (YES in step S801), the operation terminal 32 acquires the passport information of the user U from the held passport (step S802).

Next, the operation terminal 32 transmits the acquired passport information to the management server 10 (step S803). When the management server 10 receives the passport information from the operation terminal 32, the management server 10 acquires the user ID and the creditworthiness information of the user U using the travel passport number included in the passport information as a key (step S804). The management server 10 transmits the user ID and the creditworthiness information of the user U to the operation terminal 32 (step S805).

Next, upon receiving the creditworthiness information of the user U from the management server 10, the operation terminal 32 displays notification information (examination standard) corresponding to the creditworthiness of the user U included in the creditworthiness information on the display device 227 (step S806).

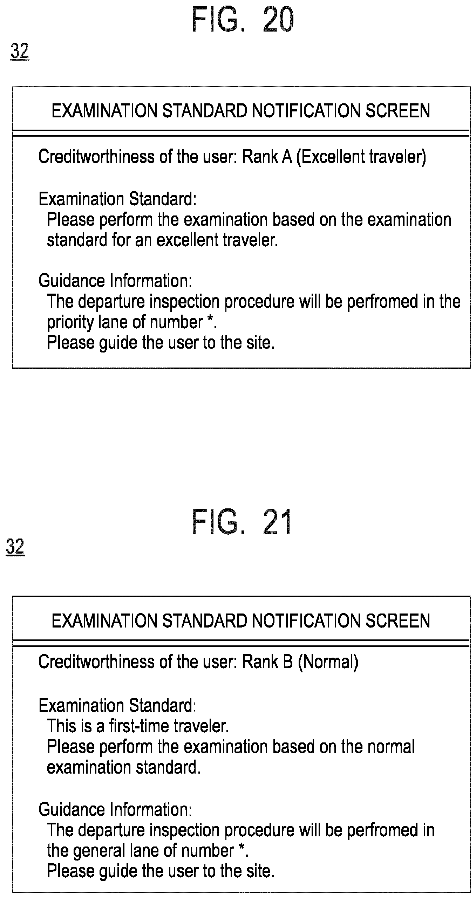

FIGS. 20 to 22 are diagrams showing an example of a screen displayed by the operation terminal 32. In FIG. 20, the screen displays the rank information of the creditworthiness of the user U "A rank (Excellent traveler)", the information of the examination standard applied to the user U "Please perform the examination based on the examination standard for an excellent traveler.", and the guidance information regarding the next authentication stage "The departure inspection procedure will be performed in the priority lane of number *. Please guide the user to the site.".

In FIG. 21, the screen displays the rank information of the creditworthiness of the user U "Rank B (Normal)", the information of the examination standard applied to the user U "This user is a first-time traveler. Please perform the examination based on the normal examination standard.", and the guidance information regarding the next authentication stage "The departure inspection procedure will be performed in the general lane of number *. Please guide the user to the site.".

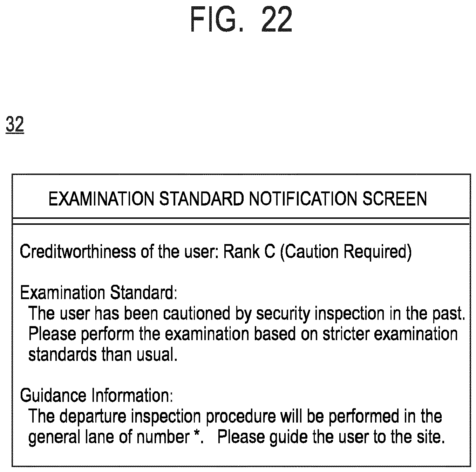

In FIG. 22, the screen displays the rank information of the creditworthiness of the user U "Rank C (Caution Required)", the information of the examination standard applied to the user U "The user has been cautioned by security inspection in the past. Please perform the examination based on stricter examination standards than usual.", and the guidance information regarding the next authentication stage "The departure inspection procedure will be performed in the general lane of number *. Please guide the user to the place where it will be performed.".

Next, when authentication processing in the security inspection procedure (authentication stage ST2) is performed (step S807), the operation terminal 32 transmits authentication result information and status information to the management server 10 (step S808).

Upon receiving the authentication result information and the status information from the operation terminal 32, the management server 10 updates the status of the user information DB11, updates the authentication result related to the authentication stage ST2 in the travel/authentication history information DB12 (step S809), and ends the process.

As described above, according to the traveler control system 1 of the present example embodiment, when the user (traveler) U arrives at the airport and the traveler ID is specified in each authentication stage, the person attribute information, the travel history information, and the authentication history information of the user U can be acquired from the travel/authentication history information DB12. The creditworthiness is calculated by applying a historical feature quantity to a predetermined algorithm from the history information. Thus, the automation apparatus (automatic gate apparatus or the like) arranged in each authentication stage can control the continuation of the examination in the apparatus based on the creditworthiness of the user U acquired from the management server 10.

In the operation terminal arranged in each authentication stage, notification information corresponding to the creditworthiness is displayed on the screen. Therefore, by referring to the screen information, the person in charge of the authentication stage can make an examination in accordance with the examination standard corresponding to the creditworthiness of the user U. More specifically, for a user U with high creditworthiness (excellent traveler), it is possible to perform a prompt examination under looser condition than usual. On the other hand, for a user U with a low creditworthiness, it is possible to perform a highly accurate examination under stricter condition than usual. As a result, throughput in the entire airport can be improved.

[Second example embodiment]

Hereinafter, the traveler control system according to a second example embodiment will be described. Reference numerals that are common to the reference numerals denote in the drawings of the first example embodiment indicate the same objects. Description of portions common to the first example embodiment will be omitted, and portions different from the first example embodiment will be described in detail.

In the first example embodiment described above, the management server 10 calculates the creditworthiness of the user U from the historical feature quantity based on a predetermined algorithm. On the other hand, the present example embodiment is different from the first example embodiment in that the management server 10 obtains the creditworthiness of the user U by applying the historical feature quantity of the user U who is scheduled for the travel to the learning model learned in advance. In the present example embodiment, the CPU 101 of the management server 10 also functions as a learning unit.

As an example of a learning method in the management server 10, it is possible to use general-purpose deep learning frameworks such as TensorFlow, Caffe2, and PyTorch.

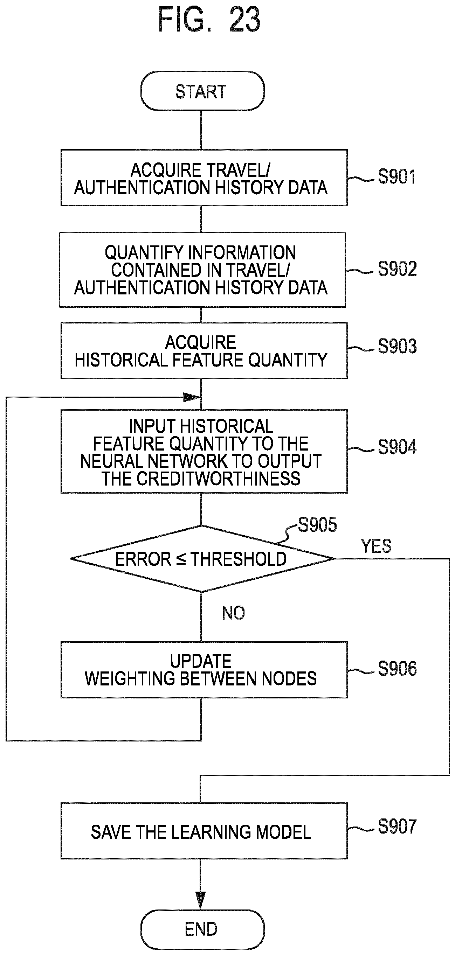

FIG. 23 is a flowchart showing an example of processing of the management server 10 in the present example embodiment. This process can be scheduled periodically, such as once a month.
Alternatively, the process may be performed irregularly during the operation of the system.

First, the management server 10 acquires the travel/authentication history data from the travel/authentication history information DB12 (step S901), and quantifies the information included in the travel/authentication history data (step S902).

Next, the management server 10 vectorizes the quantified information to acquire the historical feature quantity (step S903), inputs the historical feature quantity to the neural network, and outputs the creditworthiness (step S904).

Next, the management server 10 determines whether or not an error between the output creditworthiness and a value based on predetermined teacher data is equal to or less than a threshold (step S905). If it is determined that the error is equal to or less than the threshold value (YES in step S905), the learned learning model is stored in the storage area (step S907), and the process ends. On the other hand, if it is determined that the error exceeds the threshold value (NO in step S905), the weight between nodes in the neural network is updated (step S906), and the process returns to step S904.

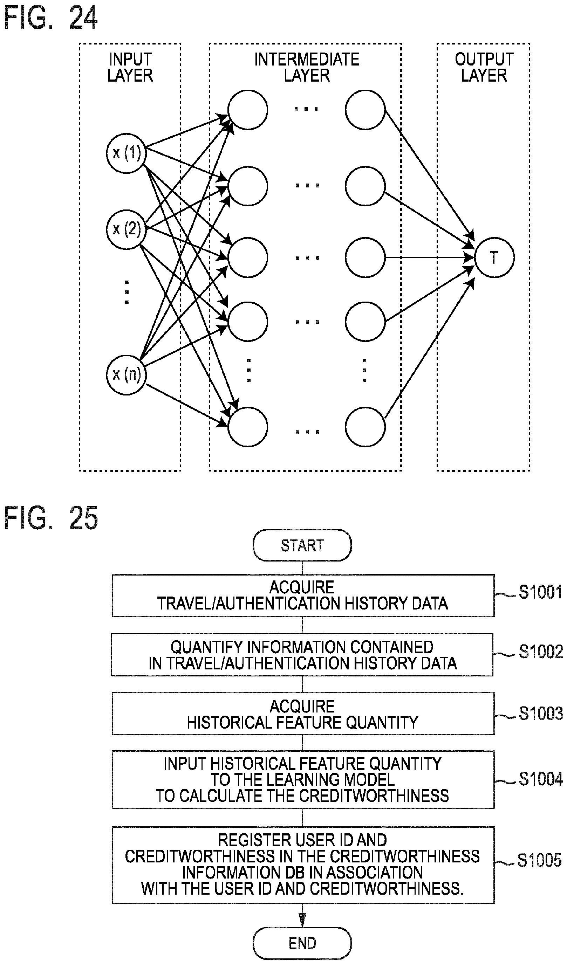

FIG. 24 is a schematic diagram for explaining a neural network used for learning processing in present example embodiment. The neural network shown in FIG. 24 includes an input layer having a plurality of nodes, intermediate layers having a plurality of nodes, and an output layer having one node. Each element of the historical feature quantity, which is an input value, is input to nodes of the input layer. Some nodes of the intermediate layers is connected to each node of the input layer. Each element of the input value input to the nodes of the intermediate layers is used for calculation in each node of the intermediate layer. Each node of the intermediate layers calculates an operation value using, for example, an input value input from nodes of the input layer, a predetermined weighting coefficient, and a predetermined bias value. Some nodes of the intermediate layers are connected to the output layer, and output the calculated operation value to the node of the output layer. The node of the output layer receives the operation value from some nodes of the intermediate layers.

The node of the output layer calculates the creditworthiness (estimated value) T of the user using the calculation value input from each node of the intermediate layer, the weighting coefficient, and the bias value. When learning a neural network, for example, an error reverse propagation method is used. Specifically, an output value acquired from the teacher data is compared with an output value acquired when the data is input to the input layer, and an error generated as a result of the comparison is fed back to the intermediate layer. This operation is repeated until the error falls below a predetermined threshold. With such learning process, when a various historical feature quantity is input to the neural network (learning model), the creditworthiness can be output with high accuracy.

FIG. 25 is a flowchart showing an example of the processing of the management server 10 according to the second example embodiment. This process is executed at a predetermined cycle or associated with the start of the examination in the second travel of the user U.

First, the management server 10 acquires the travel/authentication history data (travel history information, authentication history information, and person attribute information) from the travel/authentication history information DB12 for each traveler ID (step S1001).

Next, the management server 10 quantifies the travel history information, the authentication history information, and the person attribute information included in the travel/authentication history data (step S1002).

Next, the management server 10 acquires a historical feature quantity represented by a vector from data quantified the travel history information, the authentication history information, and the person attribute information (step S1003).

Next, the management server 10 calculates the creditworthiness of the user U by inputting the historical feature quantity to the learned learning model (step S1004).

Then, the management server 10 registers the calculated creditworthiness in the creditworthiness information DB13 in association with the user ID (step S1005).

According to the present example embodiment, the management server 10 can output the creditworthiness of the user U by inputting the historical feature quantity of the user U to the learned learning model, and therefore, there is an advantage in that the processing speed can be improved.

[Third Example Embodiment]

Hereinafter, the traveler control system 3 according to the present example embodiment will be described. Reference numerals that are common to the reference numerals denote in the drawings of the first example embodiment indicate the same objects. Description of portions common to the first example embodiment will be omitted, and portions different from the first example embodiment will be described in detail.

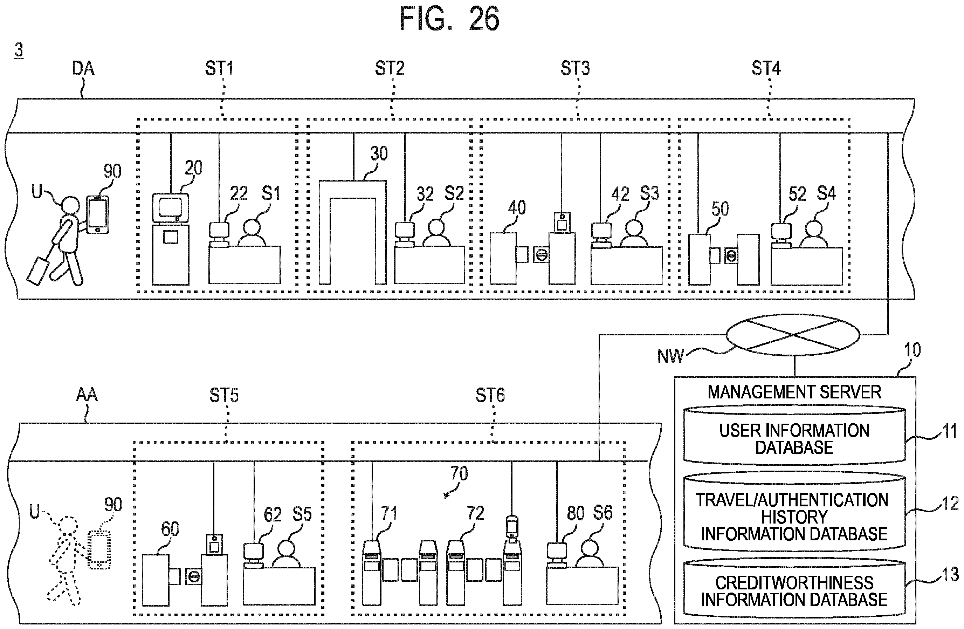

FIG. 26 is a schematic diagram showing an example of the overall configuration of the traveler control system 3 according to the present example embodiment. The present example embodiment is different from the above-described example embodiment in that guidance information related to the examination is notified to the user terminal 90 carried and had by the user U (traveler) in accordance with the creditworthiness of the user U. The user terminal 90 is, for example, a tablet terminal, a smartphone, a mobile phone, or the like. Further, it is assumed that the terminal identification information of the user terminal 90 is associated with the traveler ID in advance in the user information DB11, for example.

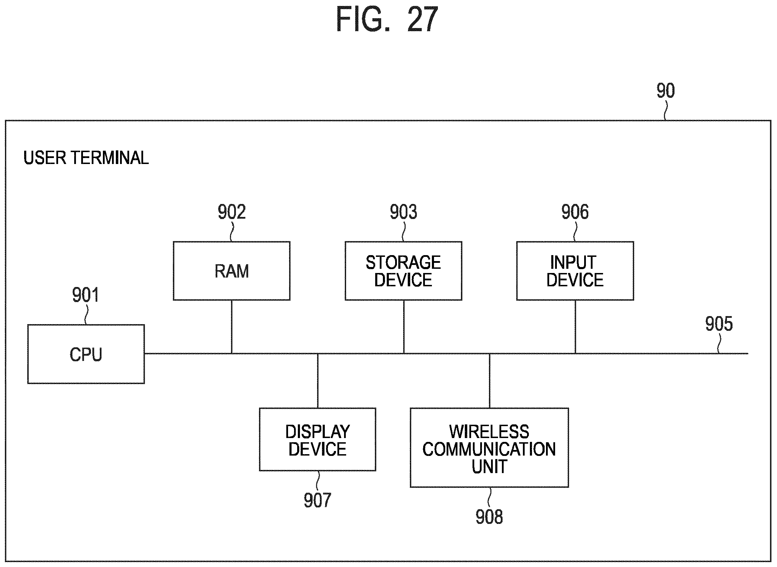

FIG. 27 is a block diagram showing an example of a hardware configuration of the user terminal 90 according to the present example embodiment. As shown in the same figure, the user terminal 90 includes a CPU 901, a RAM 902, a storage device 903, an input device 906, a display device 907, and a wireless communication unit 908. Each device is connected to a bus line 905. The wireless communication unit 908 is a wireless communication interface based on a standard such as Wi-Fi (registered trademark) or 4G, and is a module for performing communication with the check-in terminal 20 or the like.

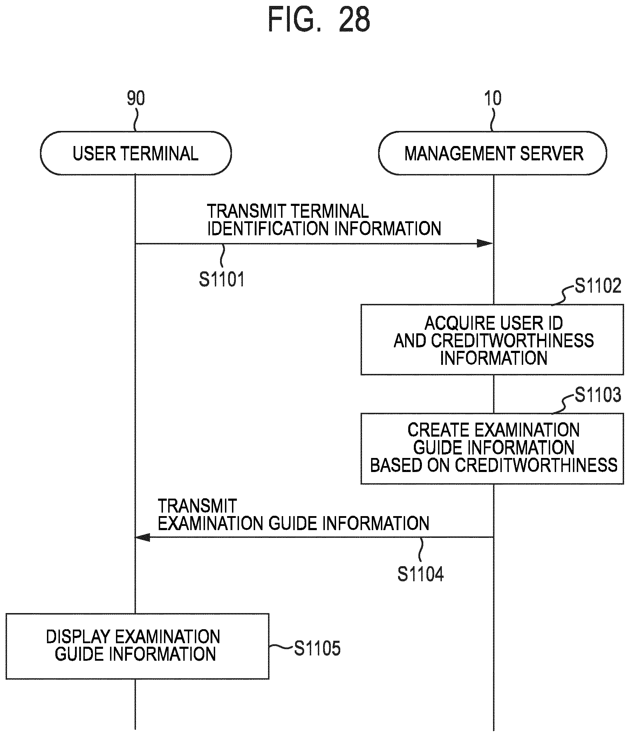

FIG. 28 is a sequence diagram showing an example of processing of the management server 10 and the user terminal 90 according to the present example embodiment.

First, the user terminal 90 transmits terminal identification information to the management server 10 (step S1101). Upon receiving the terminal information from the user terminal 90, the management server 10 acquires the user ID from the user information DB11 using the terminal identification information as a key, and also acquires the creditworthiness information of the user U from the creditworthiness information DB13 (step S1102).

Next, the management server 10 creates guidance information related to an examination for the user U based on the acquired creditworthiness (step S1103), and transmits the guidance information to the user terminal 90 (step S1104).

Upon receiving the examination guidance information from the management server 10, the user terminal 90 displays the examination guidance information on the display device 907 (step S1105).

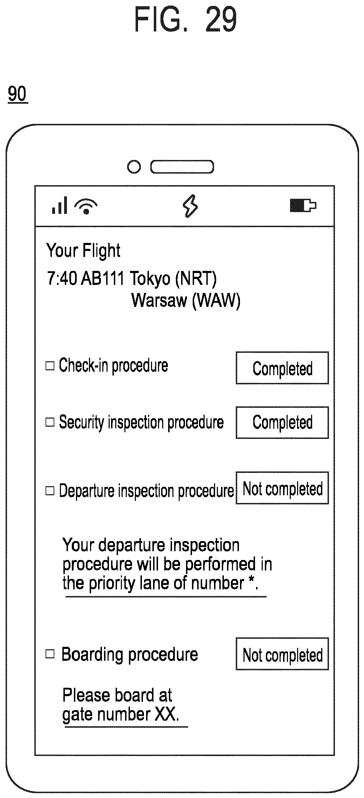

FIG. 29 is a diagram showing an example of a screen displayed by the user terminal 90 in the present example embodiment. Here, the statuses (Completed /Not completed) of the authentication stages ST1 to ST4 indicating the examinations in the country of departure and the guidance information for guiding the user U to the locations of each authentication stage are displayed on the screen. In addition, it is shown that the authentication stage ST3 (the departure inspection procedure) is performed in a priority lane.

Thus, according to the present example embodiment, the guidance information corresponding to the creditworthiness of the user can be notified to the user terminal 90. The user U can grasp the examination location or the like in advance by referring to the examination guidance information displayed on the user terminal 90. As a result, the inspection efficiency can be improved.

[Fourth Example Embodiment]

Hereinafter, the traveler control system according to the present example embodiment will be described. Reference numerals that are common to the reference numerals denote in the drawings of the first example embodiment indicate the same objects. Description of portions common to the first example embodiment will be omitted, and portions different from the first example embodiment will be described in detail.

In the present example embodiment, a signage terminal 92 is installed in each authentication stage. The signage terminal 92 is a terminal device for guiding the user U to a location of an examination corresponding to the creditworthiness of the user before the user U receives the examination in the authentication stage.

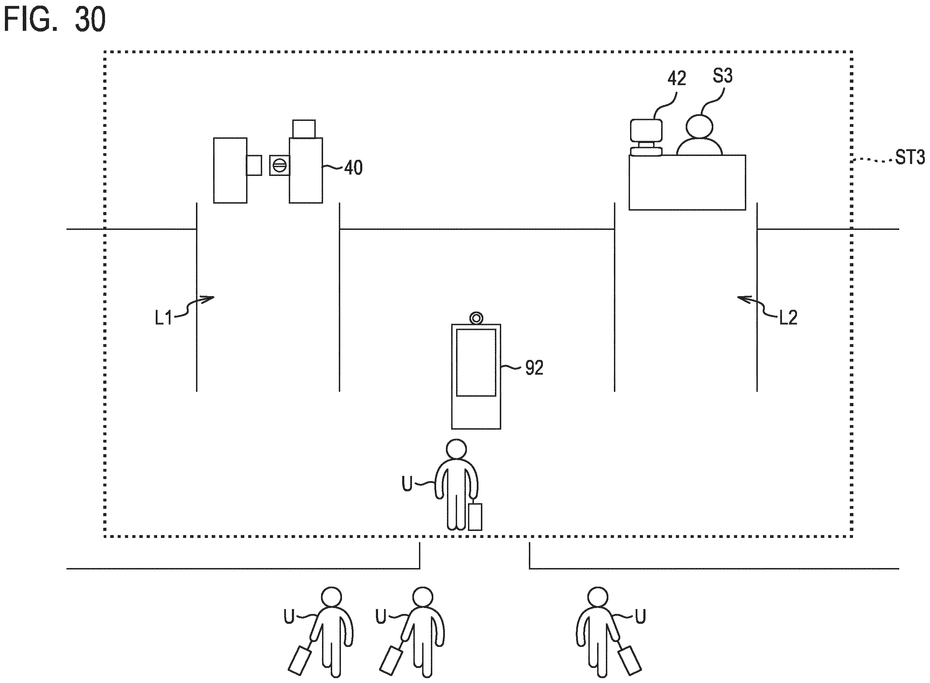

FIG. 30 is a diagram showing an arrangement example of signage terminal 92 in the present example embodiment. Here, a case is shown in which the signage terminal 92 is installed between the automated gate apparatus 40 and the manned counter in the passage of the departure inspection site (authentication stage ST3). When the signage terminal 92 identifies the user U by biometrics matching from the captured image, the signage terminal 92 displays guidance information toward the user U. For example, a user U with low creditworthiness can be guided to the manned counter. Note that the signage terminal 92 is similarly installed on the passage in the other authentication stages.

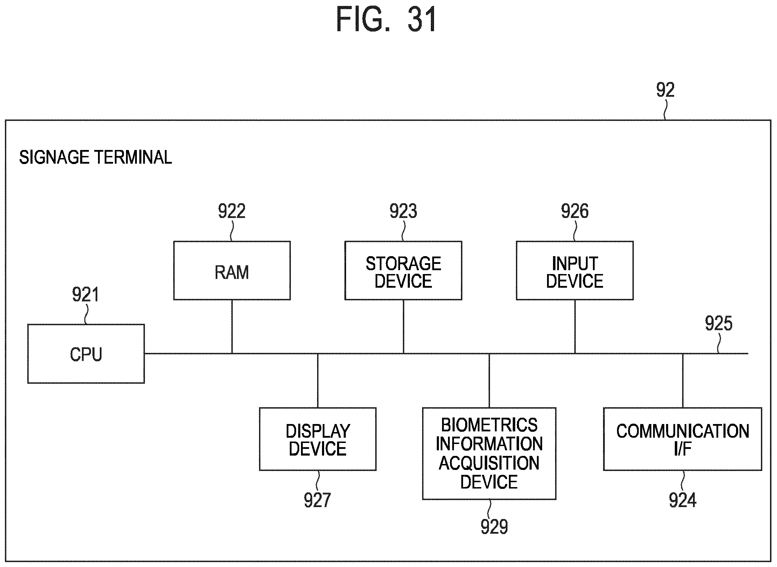

FIG. 31 is a block diagram showing an example of a hardware configuration of the signage terminal 92 in the present example embodiment. The signage terminal 92 includes a CPU 921, a RAM 922, a storage device 923, a communication I /F 924, an input device 926, a display device 927, and a biometrics information acquisition device 929. Each device is connected to a bus line 925.

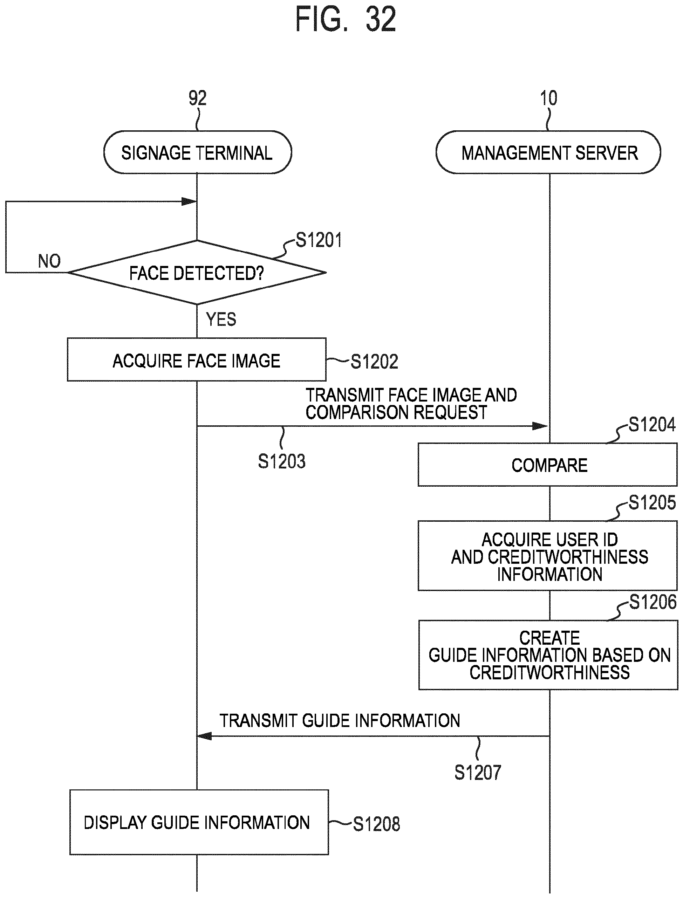

FIG. 32 is a sequence diagram showing an example of processing of the management server 10 and the signage terminal 92 according to present example embodiment.

The signage terminal 92 constantly or periodically captures an image of the front of the device by the biometrics information acquisition device 929, and determines whether or not the face of the user U is detected in the captured image (step S1201). The signage terminal 92 waits until the face of the user U is detected in the image by the biometrics information acquisition device 929 (NO in step S1201). When the signage terminal 92 determines that the face of the user U is detected by the biometrics information acquisition device 929 (YES in step S1201), the signage terminal 92 captures a face of the user U to acquire a face image of the user U as a target face image (step S1202).

Next, the signage terminal 92 transmits the target face image of the user U captured by the biometrics information acquisition device 929 to the management server 10 together with the comparison request to the management server 10 via the network NW (step S1203). Accordingly, the signage terminal 92 requests the management server 10 to compare the target face image of the user U captured by the biometrics information acquisition device 929 with the plurality of registered face images registered in the user information DB11 of the management server 10 with one to N matching.

Upon receiving the target face image and the comparison request from the signage terminal 92, the management server 10 compares the face image of the user U (step S1204). That is, the management server 10 compares the target face image received from the signage terminal 92 with the plurality of registered face images registered in the user information DB11 with one to N matching.

The management server 10 acquires the user ID associated with the registered face image from the user information DB11, and also acquires the creditworthiness information of the user U from the creditworthiness information DB13 (step S1205).

Next, the management server 10 creates guidance information for the user U based on the acquired creditworthiness (step S1206) to transmit the guidance information to the signage terminal 92 (step S1207).

Upon receiving the guidance information from the management server 10, the signage terminal 92 displays the guidance information on the display device 927 (step S1208).

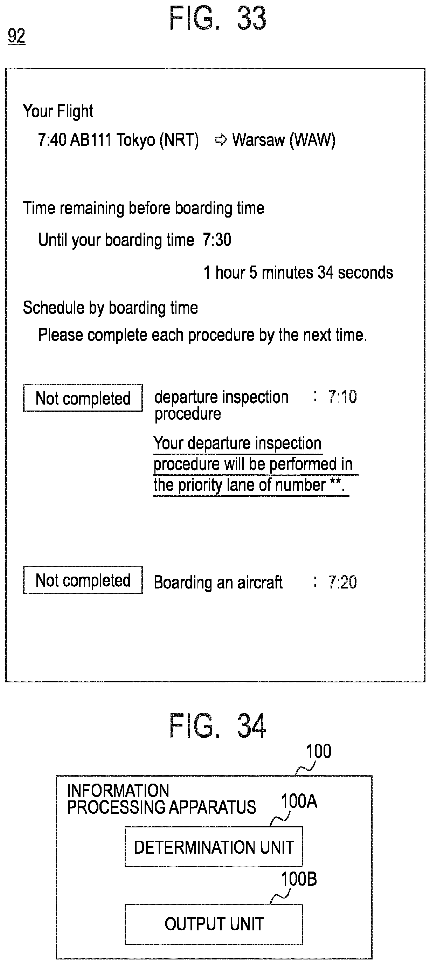

FIG. 33 is a diagram showing an example of a screen displayed by the signage terminal 92 in the present example embodiment. Here, information relating to the aircraft on which the user U boards (flight number, departure time), progress status (Completed /Not completed) of the procedure of the user U, and information relating to the execution location of each procedure (authentication stage) are displayed. In the case of FIG. 33, the user U has completed up to the security inspection procedure, and it is necessary to perform the departure inspection procedure next, but it is displayed that the departure inspection procedure is performed in the priority lane.

According to the present example embodiment, guidance information corresponding to the creditworthiness of the user U can be displayed on the signage terminal 92. By referring to the signage terminal 92 on the way toward the automated apparatus or the manned counter, the user U can efficiently move to the place where the examination is performed. Thus, the efficiency of examination in the airport can be improved.

[Fifth Example Embodiment]

FIG. 34 is a block diagram showing a function of an information processing apparatus 100 according to the present example embodiment. The information processing apparatus 100 includes a determination unit 100A that determines a creditworthiness of a traveler based on history information regarding a first travel of the traveler, and an output unit 100B that outputs information regarding a second travel based on the creditworthiness associated with identification information of the traveler who is scheduled for the second travel. According to present example embodiment, the various inspection procedures for travelers can be streamlined.

[Sixth Example Embodiment]

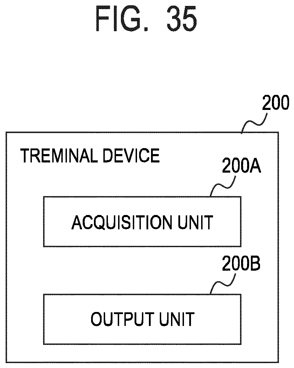

FIG. 35 is a block diagram showing the functions of a terminal device 200 in present example embodiment. The terminal device 200 includes an acquisition unit 200A that acquires a creditworthiness of a traveler based on history information regarding a first travel of the traveler, and an output unit 200B that outputs information regarding the second travel based on the creditworthiness associated with identification information of the traveler who is scheduled for the second travel. According to present example embodiment, the various inspection procedures for travelers can be streamlined.

[Modified Example Embodiments]

While the present invention has been described above with reference to the example embodiments, the present invention is not limited to the example embodiments described above. Various modifications that may be understood by those skilled in the art can be made to the configuration and details of the present invention within the scope not departing from the spirit of the present invention. For example, it should be understood that an example embodiment in which a part of the configuration of any of the example embodiments is added to another example embodiment or an example embodiment in which a part of the configuration of any of the example embodiments is replaced with a part of the configuration of another example embodiment is also one of the example embodiments to which the present invention may be applied.

In the first embodiment described above, a configuration has been described in which the management server 10 has a common database between a plurality of countries, and a terminal apparatus installed in an airport in each country accesses the database via the management server 10. However, the management server 10 may use only information acquired at an airport of one country. That is, the travel/authentication history information DB12 or the like may be configured to store only authentication history information acquired at an airport in Japan. In this case, in the authentication stages ST1 (check-in procedure) to ST4 (boarding procedure) in Japan, the management server 10 may use the creditworthiness calculated for each authentication stage from the authentication history information about the examination (authentication stages ST1 to ST4) performed when the user U has left Japan in the past. Similarly, when the user U enters Japan, the management server 10 may use the creditworthiness calculated for each authentication stage from the authentication history information about the examination (authentication stages ST5 to ST6) performed when the user U enters Japan in the past. In addition, when authentication history information of the user U at the time of entering into and leaving from Japan exists, the creditworthiness of the user U common among all authentication stages may be calculated from the authentication history information (at the time of entering into and leaving from the country).

Further, the scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

(Supplementary Note 1)

An information processing apparatus comprising:

a determination unit that determines a creditworthiness of a traveler based on history information regarding a first travel of the traveler; and
an output unit that outputs information regarding a second travel based on the creditworthiness associated with identification information of the traveler who is scheduled for the second travel.

(Supplementary Note 2)

The information processing apparatus according to supplementary note 1,
wherein the determination unit determines the creditworthiness based on a plurality of items included in the history information.

(Supplementary Note 3)

The information processing apparatus according to supplementary note 2,
wherein the determination unit calculates the creditworthiness based on an average of the historical feature quantities quantified for each of the items.

(Supplementary Note 4)

The information processing apparatus according to supplementary note 3,
wherein the determination unit determines the creditworthiness by a weighted average of the historical feature quantities quantified for each of the items.

(Supplementary Note 5)

The information processing apparatus according to supplementary note 1,
wherein the determination unit determines the creditworthiness for each of a plurality of items included in the history information.

(Supplementary Note 6)

The information processing apparatus according to supplementary note 2,
wherein the determination unit calculates the creditworthiness based on a learning model in which a relationship between a historical feature quantity quantified for each item and the creditworthiness is learned in advance.

(Supplementary Note 7)

The information processing apparatus according to supplementary note 6 further comprising:
a learning unit that learns the learning model by updating weighting between nodes of a neural network that outputs the creditworthiness with respect to the input historical feature quantity.

(Supplementary Note 8)

The information processing apparatus according to supplementary note 7,
wherein the learning unit updates the learning model at a predetermined cycle.

(Supplementary Note 9)

The information processing apparatus according to supplementary note 7,
wherein the learning unit updates the learning model along with the update of the history information.

(Supplementary Note 10)

The information processing apparatus according to any one of supplementary notes 2 to 9,
wherein the item includes an examination result of an examination performed along with the first travel.

(Supplementary Note 11)

The information processing apparatus according to supplementary note 10,

wherein the examination result is defined in three or more levels.

(Supplementary Note 12)

The information processing apparatus according to any one of supplementary notes 2 to 11, wherein the item includes at least one of an origin, a destination, a flight number of an aircraft on board, a departure date, and an arrival date in the first travel.

(Supplementary Note 13)

The information processing apparatus according to any one of supplementary notes 2 to 11, wherein the item includes at least one of a nationality, a gender, and an age of the traveler.

(Supplementary Note 14)

The information processing apparatus according to any one of supplementary notes 1 to 13, wherein the information regarding the second travel represents a standard of an examination performed in the second travel, and the standard of the examination is determined according to the creditworthiness.

(Supplementary Note 15)

The information processing apparatus according to supplementary note 14, wherein the information regarding the second travel represents the standard of a series of the plurality of the examinations performed in the second travel, each of the standards of the examination is defined according to the creditworthiness common to the plurality of the examinations.

(Supplementary Note 16)

The information processing apparatus according to supplementary note 14, wherein the information regarding the second travel represents the standard of a series of the plurality of the examinations performed in the second travel, each of the standards of the examination is determined according to the creditworthiness for each the examination.

(Supplementary Note 17)

The information processing apparatus according to any one of supplementary notes 14 to 16, wherein the standard of the examination is defined by a comparison of the creditworthiness and a predetermined threshold.

(Supplementary Note 18)

The information processing apparatus according to any one of supplementary notes 14 to 17, wherein the standard of the examination is defined in a plurality of levels.

(Supplementary Note 19)

The information processing apparatus according to supplementary note 17, wherein the threshold varies depending on the type of examination.

(Supplementary Note 20)

The information processing apparatus according to any one of supplementary notes 1 to 13, wherein the information regarding the second travel is information for guiding the traveler to a location corresponding to an examination being performed in the second travel.

(Supplementary Note 21)

A terminal device comprising:

an acquisition unit that acquires a creditworthiness of a traveler based on history information regarding a first travel of the traveler; and

an output unit that outputs information regarding the second travel based on the creditworthiness associated with identification information of the traveler who is scheduled for the second travel.

(Supplementary Note 22)

An information processing method comprising:

determining a creditworthiness of a traveler based on history information regarding a first travel of the traveler; and outputting information regarding the second travel based on the creditworthiness associated with identification information of the traveler who is scheduled for the second travel.

(Supplementary Note 23)

A storage medium having recorded thereon a program for causing a computer to execute:

determining a creditworthiness of a traveler based on history information regarding a first travel of the traveler; and outputting information regarding the second travel based on the creditworthiness associated with identification information of the traveler who is scheduled for the second travel.

[Reference Signs List]

| | |
|---|---|
| NW | network |
| DA | departure airport |
| AA | arrival airport |
| 1,3 | traveler control system |
| 10 | management server |
| 11 | user information DB |
| 12 | travel/authentication history information DB |
| 13 | creditworthiness information DB |
| 20 | check-in terminal |
| 22 , 32 , 42 , 52 , 62 , 80 | operation terminal |
| 30 | security inspection apparatus |
| 40 , 60 | automated gate apparatus |
| 50 | boarding gate apparatus |
| 70 | automatic customs gate apparatus |
| 71 | entrance gate terminal |
| 72 | exit gate terminal |
| 90 | user terminal |
| 92 | signage terminal |

**Claims**

1.   An information processing apparatus comprising:

a determination unit that determines a creditworthiness of a traveler based on history information regarding a first travel of the traveler; and an output unit that outputs information regarding a second travel based on the creditworthiness associated with identification information of the traveler who is scheduled for the second travel.

2.   The information processing apparatus according to claim 1, wherein the determination unit determines the creditworthiness based on a plurality of items included in the history information.

3. The information processing apparatus according to claim 2,
   wherein the determination unit calculates the creditworthiness based on an average of the historical feature quantities quantified for each of the items.

4. The information processing apparatus according to claim 3,
   wherein the determination unit determines the creditworthiness by a weighted average of the historical feature quantities quantified for each of the items.

5. The information processing apparatus according to claim 1,
   wherein the determination unit determines the creditworthiness for each of a plurality of items included in the history information.

6. The information processing apparatus according to claim 2,
   wherein the determination unit calculates the creditworthiness based on a learning model in which a relationship between a historical feature quantity quantified for each item and the creditworthiness is learned in advance.

7. The information processing apparatus according to claim 6 further comprising:
   a learning unit that learns the learning model by updating weighting between nodes of a neural network that outputs the creditworthiness with respect to the input historical feature quantity.

8. The information processing apparatus according to claim 7,
   wherein the learning unit updates the learning model at a predetermined cycle.

9. The information processing apparatus according to claim 7,
   wherein the learning unit updates the learning model along with the update of the history information.

10. The information processing apparatus according to any one of claims 2 to 9,
    wherein the item includes an examination result of an examination performed along with the first travel.

11. The information processing apparatus according to claim 10,
    wherein the examination result is defined in three or more levels.

12. The information processing apparatus according to any one of claims 2 to 11,
    wherein the item includes at least one of an origin, a destination, a flight number of an aircraft on board, a departure date, and an arrival date in the first travel.

13. The information processing apparatus according to any one of claims 2 to 11,
    wherein the item includes at least one of a nationality, a gender, and an age of the traveler.

14. The information processing apparatus according to any one of claims 1 to 13,
    wherein the information regarding the second travel represents a standard of an examination performed in the second travel, and the standard of the examination is determined according to the creditworthiness.

15. The information processing apparatus according to claim 14,
    wherein the information regarding the second travel represents the standard of a series of the plurality of the examinations performed in the second travel, each of the standards of the examination is defined according to the creditworthiness common to the plurality of the examinations.

16. The information processing apparatus according to claim 14,
    wherein the information regarding the second travel represents the standard of a series of the plurality of the examinations performed in the second travel, each of the standards of the examination is determined according to the creditworthiness for each the examination.

17. The information processing apparatus according to any one of claims 14 to 16,
    wherein the standard of the examination is defined by a comparison of the creditworthiness and a predetermined threshold.

18. The information processing apparatus according to any one of claims 14 to 17,

wherein the standard of the examination is defined in a plurality of levels.

19. The information processing apparatus according to claim 17,
    wherein the threshold varies depending on the type of examination.

20. The information processing apparatus according to any one of claims 1 to 13,
    wherein the information regarding the second travel is information for guiding the traveler to a location corresponding to an examination being performed in the second travel.

21. A terminal device comprising:

    an acquisition unit that acquires a creditworthiness of a traveler based on history information regarding a first travel of the traveler; and
    an output unit that outputs information regarding the second travel based on the creditworthiness associated with identification information of the traveler who is scheduled for the second travel.

22. An information processing method comprising:

    determining a creditworthiness of a traveler based on history information regarding a first travel of the traveler; and
    outputting information regarding the second travel based on the creditworthiness associated with identification information of the traveler who is scheduled for the second travel.

23. A storage medium having recorded thereon a program for causing a computer to execute:

    determining a creditworthiness of a traveler based on history information regarding a first travel of the traveler; and
    outputting information regarding the second travel based on the creditworthiness associated with identification information of the traveler who is scheduled for the second travel.

## FIG. 1

EP 3 951 698 A1

## FIG. 2A

| USER ID | PASSPORT NUMBER | PASSPORT ISSUING COUNTRY | NAME | NATIONALITY | FACE IMAGE | FLIGHT NUMBER | ORIGIN | DESTINATION | DEPARTURE TIME | BOARDING GATE | STATUS |
|---|---|---|---|---|---|---|---|---|---|---|---|
| 20159 | **-****53 | JPN | AAA aaa | JPN | | AB101 | NRT | LHR | 6:00 | 50 | 2 |
| 20160 | **-****42 | XXX | BBB bbb | XXX | | AB102 | NRT | CDG | 6:10 | 60 | 1 |
| 20161 | **-****61 | YYY | CCC ccc | YYY | | AB103 | NRT | FCO | 6:20 | 40 | 2 |
| 20162 | **-****25 | ZZZ | DDD ddd | ZZZ | | AB104 | NRT | MXP | 6:30 | 50 | 1 |

## FIG. 2B

| USER ID | PERSON ATTRIBUTE INFORMATION ( NATIONALITY, GENDER, AGE ) | TRAVEL HISTORY INFORMATION ( ORIGIN, DESTINATION, FLIGHT NUMBER, DEPARTURE DATE, ARRIVAL DATE ) | AUTHENTICATION HISTORY INFORMATION ( ST1 , ST2 , ST3 , ST4 , ST5 , ST6 ) |
|---|---|---|---|
| 20159 | (JPN,M,20) | ( NRT , AAA , AB123 , 12/01/2018 , 13/01/2018 ) | ( OK , OK , OK , OK , OK , OK ) |
| 20160 | (XXX,F,30) | ( NRT , BBB , AB124 , 12/01/2015 , 13/01/2015 ) , ( BBB , NRT , AC128 , 19/01/2015 , 20/01/2015 ) | ( OK , OK , OK , OK , OK , OK ) , ( OK , OK , OK , OK , OK , OK ) |
| 20161 | (YYY,M,42) | ( NRT , CCC , EF125 , 18/03/2018 , 19/03/2018 ) , ( CCC , NRT , EF226 , 03/04/2018 , 04/04/2018 ) , ( NRT , CCC , EF125 , 15/01/2019 , 16/01/2019 ) , ( CCC , NRT , EF226 , 03/02/2019 , 04/02/2019 ) , ( NRT , DDD , SS227 , 15/02/2019 , 16/02/2019 ) , ( DDD , NRT , KS118 , 23/02/2019 , 24/02/2019 ) | ( OK , OK , OK , OK , OK , OK ) , ( OK , OK , OK , OK , OK , OK ) , ( OK , OK , OK , OK , OK , OK ) , ( OK , OK , OK , OK , OK , OK ) , ( OK , OK , OK , OK , OK , OK ) , ( OK , OK , OK , OK , OK , OK ) |
| 20162 | (ZZZ,M,30) | ( EEE , NRT , HF225 , 15/03/2018 , 16/03/2018 ) , ( NRT , EEE , CD126 , 02/04/2018 , 03/04/2018 ) , ( EEE , NRT , HF225 , 15/01/2019 , 16/01/2019 ) , ( NRT , EEE , CD126 , 03/02/2019 , 04/02/2019 ) , ( EEE , NRT , HF225 , 15/02/2019 , 16/02/2019 ) , ( NRT , CCC , EF125 , 20/02/2019 , 21/02/2019 ) | ( OK , OK , OK , OK , OK , OK ) , ( OK , WR , OK , OK , OK , OK ) , ( OK , OK , OK , OK , OK , WR ) , ( OK , OK , OK , OK , OK , OK ) , ( OK , OK , WR , OK , OK , OK ) , ( OK , OK , OK , OK , OK , OK ) |

## FIG. 2C

| USER ID | CREDITWORTHINESS ( AVERAGE ) | CREDITWORTHINESS ( ST1 ) | CREDITWORTHINESS ( ST2 ) | CREDITWORTHINESS ( ST3 ) | CREDITWORTHINESS ( ST4 ) | CREDITWORTHINESS ( ST5 ) | CREDITWORTHINESS ( ST6 ) |
|---|---|---|---|---|---|---|---|
| 20159 | 1 | 1 | 1 | 1 | 1 | 1 | 1 |
| 20160 | 1 | 1 | 1 | 1 | 1 | 1 | 1 |
| 20161 | 1 | 1 | 1 | 1 | 1 | 1 | 1 |
| 20162 | 0.83 | 1 | 0.67 | 0.67 | 1 | 1 | 0.67 |

# FIG. 3

MANAGEMENT SERVER

10

102
RAM

104
COMMUNICATION I/F

101
CPU

103
STORAGE DEVICE

105

# FIG. 4

CHECK-IN TERMINAL 20

- 201 CPU
- 202 RAM
- 203 STORAGE DEVICE
- 206 INPUT DEVICE
- 207 DISPLAY DEVICE
- 205
- 208 MEDIUM READING DEVICE
- 204 COMMUNICATION I/F

EP 3 951 698 A1

# FIG. 5

OPERATION TERMINAL

| 222 | 223 | 226 | 227 |
|-----|-----|-----|-----|
| RAM | STORAGE DEVICE | INPUT DEVICE | DISPLAY DEVICE |

221

CPU

225

MEDIUM READING DEVICE

228

COMMUNICATION I/F

224

EP 3 951 698 A1

# FIG. 6

EP 3 951 698 A1

30

SECURITY INSPECTION APPARATUS

| | | | |
|---|---|---|---|
| 302 | 303 | 306 | 307 |
| RAM | STORAGE DEVICE | INPUT DEVICE | DISPLAY DEVICE |

301

CPU

305

BIOMETRICS INFORMATION ACQUISITION DEVICE

METAL DETECTOR GATE

COMMUNICATION I/F

309

310

304

# FIG. 7

EP 3 951 698 A1

40,60

**AUTOMATED GATE APPARATUS**

| | 402,602 | 403,603 | 406,606 | 407,607 |
|---|---|---|---|---|
| | RAM | STORAGE DEVICE | INPUT DEVICE | DISPLAY DEVICE |

401,601

CPU

405,605

BIOMETRICS INFORMATION ACQUISITION DEVICE

GATE

COMMUNICATION I/F

409,609

411,611

404,604

# FIG. 8

BOARDING GATE APPARATUS

50

501 CPU

502 RAM

503 STORAGE DEVICE

506 INPUT DEVICE

507 DISPLAY DEVICE

505

509 BIOMETRICS INFORMATION ACQUISITION DEVICE

511 GATE

504 COMMUNICATION I/F

EP 3 951 698 A1

# FIG. 9

ENTRANCE GATE TERMINAL 71

- 711 CPU
- 712 RAM
- 713 STORAGE DEVICE
- 715
- 716 ENTRANCE GATE DOOR
- 717 PASSAGE DETECTION SENSOR
- 714 COMMUNICATION I/F
- 718 GUIDE INDICATOR

EP 3 951 698 A1

# FIG. 10

EP 3 951 698 A1

# FIG. 11

```
                    ┌─────────────┐
                    │    START    │
                    └──────┬──────┘
                           │
      ┌────────────────────────────────────┐
      │  ACQUIRE TRAVEL/AUTHENTICATION      │── S101
      │         HISTORY DATA                │
      └────────────────────┬───────────────┘
                           │
      ┌────────────────────────────────────┐
      │      QUANTIFY INFORMATION           │
      │      CONTAINED IN TRAVEL/           │── S102
      │  AUTHENTICATION HISTORY DATA        │
      └────────────────────┬───────────────┘
                           │
      ┌────────────────────────────────────┐
      │            ACQUIRE                  │── S103
      │   HISTORICAL FEATURE QUANTITY       │
      └────────────────────┬───────────────┘
                           │
      ┌────────────────────────────────────┐
      │        INPUT HISTORICAL            │
      │      FEATURE QUANTITY TO           │── S104
      │  THE RELATIONAL EXPRESSION TO      │
      │ CALCULATE THE CREDITWORTHINESS     │
      └────────────────────┬───────────────┘
                           │
      ┌────────────────────────────────────┐
      │   REGISTER CREDITWORTHINESS        │
      │     IN THE CREDITWORTHINESS        │── S105
      │      INFORMATION DATABASE          │
      └────────────────────┬───────────────┘
                           │
                    ┌──────▼──────┐
                    │     END     │
                    └─────────────┘
```

# FIG. 12

# FIG. 13

20

| GUIDE SCREEN |
|---|
| You are not allowed to use the automatic check-in machine now.<br><br>Please check in at the check-in counter. |

# FIG. 14

30

SECURITY INSPECTION APPARATUS

10

MANAGEMENT SERVER

S301
NO ◇ FACE DETECTED?
YES

ACQUIRE FACE IMAGE — S302

TRANSMIT FACE IMAGE AND
COMPARISON REQUEST
S303

S304
COMPARE

TRANSMIT USER ID, CREDITWORTHINESS
INFORMATION AND COMPARISON
RESULT INFORMATION

S305
◇ MATCHING
IN COMPARISON?
NO
S307
YES ⌐ S306

ACQUIRE USER ID
AND CREDITWORTHINESS
INFORMATION

TRANSMIT
COMPARISON RESULT INFORMATION

S308

NO ◇ S309
MATCHING
IN COMPARISON?
YES

NOTIFY THE EXAMINATION
STANDARD CORRESPONDING — S310
TO THE CREDITWORTHINESS

S314

NOTIFY

SECURITY INSPECTION — S311

TRANSMIT STATUS INFORMATION AND
AUTHENTICATION RESULT
S312

S313
UPDATE DATABASE

# FIG. 15

## FIG. 16

BOARDING GATE APPARATUS 50

MANAGEMENT SERVER 10

**S501** FACE DETECTED? — NO

YES

ACQUIRE FACE IMAGE — S502

TRANSMIT FACE IMAGE AND COMPARISON REQUEST
S503

COMPARE — S504

TRANSMIT COMPARISON RESULT INFORMATION
NO
S507

MATCHING IN COMPARISON? — S505

YES — S506

ACQUIRE USER ID AND CREDITWORTHINESS INFORMATION

TRANSMIT USER ID, CREDITWORTHINESS INFORMATION AND COMPARISON RESULT INFORMATION
S508

MATCHING IN COMPARISON? — S509
NO

YES

CREDITWORTHINESS ≥ THRESHOLD — S510
NO

S515 NOTIFY

YES

S514 NOTIFY

OPEN GATE — S511

TRANSMIT STATUS INFORMATION AND AUTHENTICATION RESULT
S512

UPDATE DATABASE — S513

40

# FIG. 17

60

**AUTOMATED GATE APPARATUS**

10

**MANAGEMENT SERVER**

S601
**FACE DETECTED?** — NO

YES

**ACQUIRE FACE IMAGE** — S602

TRANSMIT FACE IMAGE AND
COMPARISON REQUEST

S603

S604
**COMPARE**

TRANSMIT COMPARISON
RESULT INFORMATION

S605
**MATCHING IN COMPARISON?** — NO

S607

YES — S606

**ACQUIRE USER ID AND CREDITWORTHINESS INFORMATION**

TRANSMIT USER ID,
CREDITWORTHINESS INFORMATION AND
COMPARISON RESULT INFORMATION

S608

S609
**MATCHING IN COMPARISON?** — NO

YES

S610
**CREDITWORTHINESS ≥ THRESHOLD** — NO

S615
**NOTIFY**

YES

S614
**NOTIFY**

**OPEN GATE** — S611

TRANSMIT STATUS INFORMATION AND
AUTHENTICATION RESULT

S612

S613
**UPDATE DATABASE**

FIG. 18

70(71,72)

AUTOMATIC CUSTOMS GATE APPARATUS

10

MANAGEMENT SERVER

S701
NO ← FACE DETECTED?

YES

ACQUIRE FACE IMAGE — S702

TRANSMIT FACE IMAGE AND
COMPARISON REQUEST

S703

S704
COMPARE

TRANSMIT COMPARISON
RESULT INFORMATION

S705
MATCHING
IN COMPARISON?

NO

S707

YES — S706

ACQUIRE USER ID
AND CREDITWORTHINESS
INFORMATION

TRANSMIT USER ID,
CREDITWORTHINESS INFORMATION AND
COMPARISON RESULT INFORMATION

S708

S709
NO ← MATCHING
IN COMPARISON?

YES
S710
CREDITWORTHINESS
≥ THRESHOLD

NO

S716

NOTIFY

YES

S715
NOTIFY

S711 — CUSTOMS INSPECTION

OPEN ENTRANCE
GATE DOOR

OPEN EXIT GATE DOOR — S712

S717

TRANSMIT STATUS INFORMATION AND
AUTHENTICATION RESULT

S714

S713

UPDATE DATABASE

# FIG. 19

32

( OPERATION TERMINAL )

10

( MANAGEMENT SERVER )

S801

NO — PASSPORT IS HELD OVER?

YES

ACQUIRE PASSPORT INFORMATION — S802

TRANSMIT PASSPORT INFORMATION

S803

ACQUIRE USER ID AND CREDITWORTHINESS INFORMATION — S804

TRANSMIT USER ID AND CREDITWORTHINESS INFORMATION

S805

NOTIFY THE EXAMINATION STANDARD CORRESPONDING TO THE CREDITWORTHINESS — S806

AUTHENTICATION PROCESS — S807

TRANSMIT STATUS INFORMATION AND AUTHENTICATION RESULT

S808

UPDATE DATABASE — S809

# FIG. 20

32

---

### EXAMINATION STANDARD NOTIFICATION SCREEN

---

Creditworthiness of the user: Rank A (Excellent traveler)

Examination Standard:
  Please perform the examination based on the examination
  standard for an excellent traveler.

Guidance Information:
  The departure inspection procedure will be perfromed in the
  priority lane of number *.
  Please guide the user to the site.

---

# FIG. 21

32

---

### EXAMINATION STANDARD NOTIFICATION SCREEN

---

Creditworthiness of the user: Rank B (Normal)

Examination Standard:
  This is a first-time traveler.
  Please perform the examination based on the normal
  examination standard.

Guidance Information:
  The departure inspection procedure will be perfromed in
  the general lane of number *.
  Please guide the user to the site.

---

# FIG. 22

<u>32</u>

| EXAMINATION STANDARD NOTIFICATION SCREEN |
|---|
| Creditworthiness of the user: Rank C (Caution Required)<br><br>Examination Standard:<br> The user has been cautioned by security inspection in the past.<br> Please perform the examination based on stricter examination<br> standards than usual.<br><br>Guidance Information:<br> The departure inspection procedure will be performed in the<br> general lane of number *.  Please guide the user to the site. |

# FIG. 23

START

ACQUIRE TRAVEL/
AUTHENTICATION HISTORY DATA ~S901

QUANTIFY INFORMATION
CONTAINED IN TRAVEL/
AUTHENTICATION HISTORY DATA ~S902

ACQUIRE
HISTORICAL FEATURE QUANTITY ~S903

INPUT HISTORICAL
FEATURE QUANTITY TO THE
NEURAL NETWORK TO OUTPUT
THE CREDITWORTHINESS ~S904

S905

ERROR ≤ THRESHOLD    YES

NO

UPDATE
WEIGHTING BETWEEN NODES ~S906

SAVE THE LEARNING MODEL ~S907

END

# FIG. 24

INPUT
LAYER

INTERMEDIATE
LAYER

OUTPUT
LAYER

$x(1)$

$x(2)$

$x(n)$

. . .

. . .

. . .

. . .

. . .

T

# FIG. 25

START

ACQUIRE
TRAVEL/AUTHENTICATION HISTORY DATA ~S1001

QUANTIFY INFORMATION CONTAINED
IN TRAVEL/AUTHENTICATION HISTORY DATA ~S1002

ACQUIRE
HISTORICAL FEATURE QUANTITY ~S1003

INPUT HISTORICAL FEATURE QUANTITY
TO THE LEARNING MODEL
TO CALCULATE THE CREDITWORTHINESS ~S1004

REGISTER USER ID AND
CREDITWORTHINESS IN THE CREDITWORTHINESS
INFORMATION DB IN ASSOCIATION
WITH THE USER ID AND CREDITWORTHINESS. ~S1005

END

# FIG. 26

EP 3 951 698 A1

# FIG. 27

USER TERMINAL (90)

- CPU (901)
- RAM (902)
- STORAGE DEVICE (903)
- INPUT DEVICE (906)
- DISPLAY DEVICE (907)
- WIRELESS COMMUNICATION UNIT (908)
- Bus (905)

EP 3 951 698 A1

# FIG. 28

90

USER TERMINAL

10

MANAGEMENT SERVER

TRANSMIT TERMINAL
IDENTIFICATION INFORMATION

S1101

S1102

ACQUIRE USER ID
AND CREDITWORTHINESS
INFORMATION

S1103

CREATE EXAMINATION
GUIDE INFORMATION
BASED ON CREDITWORTHINESS

TRANSMIT
EXAMINATION GUIDE INFORMATION

S1104

DISPLAY EXAMINATION
GUIDE INFORMATION

S1105

# FIG. 29

90

Your Flight
7:40 AB111 Tokyo (NRT)
               Warsaw (WAW)

☐ Check-in procedure          | Completed |

☐ Security inspection procedure | Completed |

☐ Departure inspection procedure | Not completed |

Your departure inspection
procedure will be performed in
the priority lane of number *.

☐ Boarding procedure          | Not completed |

Please board at
gate number XX.

FIG. 30

# FIG. 31

SIGNAGE TERMINAL 92

- CPU 921
- RAM 922
- STORAGE DEVICE 923
- INPUT DEVICE 926
- DISPLAY DEVICE 927
- BIOMETRICS INFORMATION ACQUISITION DEVICE 929
- COMMUNICATION I/F 924
- 925

EP 3 951 698 A1

# FIG. 32

92

SIGNAGE TERMINAL

10

MANAGEMENT SERVER

NO ← FACE DETECTED? S1201

YES

ACQUIRE FACE IMAGE — S1202

TRANSMIT FACE IMAGE AND
COMPARISON REQUEST

S1203

S1204

COMPARE

S1205

ACQUIRE USER ID
AND CREDITWORTHINESS
INFORMATION

S1206

CREATE
GUIDE INFORMATION BASED ON
CREDITWORTHINESS

TRANSMIT GUIDE INFORMATION

S1207

DISPLAY GUIDE INFORMATION — S1208

# FIG. 33

92

Your Flight

   7:40 AB111 Tokyo (NRT)   ⇨ Warsaw (WAW)


Time remaining before boarding time

   Until your boarding time  7:30

                              1 hour 5 minutes 34 seconds

Schedule by boarding time

   Please complete each procedure by the next time.


| Not completed | departure inspection   :  7:10
procedure |

Your departure inspection
procedure will be performed in
the priority lane of number **.


| Not completed | Boarding an aircraft    :  7:20 |

# FIG. 34

100

INFORMATION
PROCESSING APPARATUS    100A

DETERMINATION UNIT

100B

OUTPUT UNIT

# FIG. 35

200

TREMINAL DEVICE

200A

ACQUISITION UNIT

200B

OUTPUT UNIT

**INTERNATIONAL SEARCH REPORT**

International application No.

PCT/JP2019/014273

A. CLASSIFICATION OF SUBJECT MATTER
Int. Cl. G06Q50/26(2012.01)i

According to International Patent Classification (IPC) or to both national classification and IPC

B. FIELDS SEARCHED

Minimum documentation searched (classification system followed by classification symbols)
Int. Cl. G06Q50/26

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-20316 A (HITACHI, LTD.) 31 January 2013, entire text, all drawings & US 2013/0013527 A1 & EP 2544137 A1 & CN 102867277 A | 1-23 |
| A | JP 2016-526733 A (ACCENTURE GLOBAL SERVICES LIMITED) 05 September 2016, entire text, all drawings & US 2015/0012530 A1 & WO 2015/002965 A1 & CA 2917100 A | 1-23 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21.06.2019 | 02.07.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015222459 A